# EUROPEAN PATENT APPLICATION

(11) **EP 2 075 251 A2**
(43) Date of publication of application: **01.07.2009**
(21) Application number: 08173054.1
(22) Date of filing: 30.12.2008
(51) Int. Cl.: C07F 15/00, C09K 11/06, H05B 33/14

(54) **Novel red electroluminescent compounds and organic electroluminescent device using the same**

(30) Priority: 31.12.2007 KR 20070142002
(71) Applicant: Gracel Display Inc., Seoul 133-833 (KR)
(72) Inventor: Kim, Hyun, Gyeonggi-do, 431-724 (KR); Cho, Young Jun, 136-060, Seoul (KR); Kwon, Hyuck Joo, 130-100, Seoul (KR); Kim, Bong Ok, 135-090, Seoul (KR); Yoon, Seung Soo, 135-884 Seoul (KR); Kim, Sung Min, 157-886 Seoul (KR)
(74) Representative: Kent, Venetia Katherine

(57) **Abstract**

The present invention relates to novel red phosphorescent compounds exhibiting high luminous efficiency, and organic electroluminescent devices comprising the same.

## Description

### FIELD OF THE INVENTION

The present invention relates to novel red electroluminescent compounds exhibiting high luminous efficiency and organic electroluminescent devices using the same.

### BACKGROUND OF THE INVENTION

The most important factor to determine luminous efficiency in an OLED is the type of electroluminescent material. Though fluorescent materials has been widely used as an electroluminescent material up to the present, development of phosphorescent materials is one of the best methods to improve the luminous efficiency theoretically up to four(4) times, in view of electroluminescent mechanism.

Up to now, iridium (III) complexes are widely known as phosphorescent material, including (acac)Ir(btp)₂, Ir(ppy)₃ and Firpic, as the red, green and blue one, respectively. In particular, a lot of phosphorescent materials have been recently investigated in Japan and Europe and America.

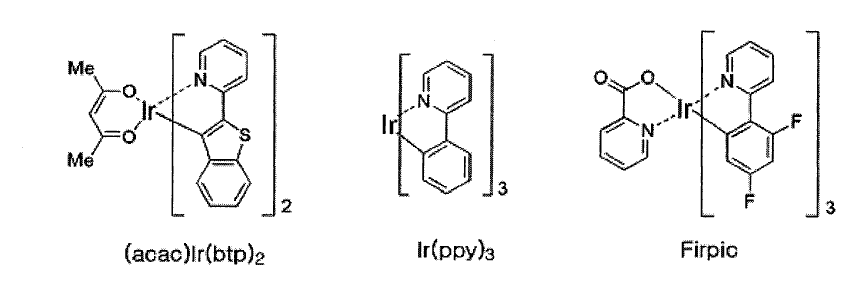

Among conventional red phosphorescent materials, several materials are reported to have good EL properties. However, very rare materials among them have reached the level of commercialization. As the best material, an iridium complex of 1-phenyl isoquinoline may be mentioned, which is known to have excellent EL property and to exhibit color purity of dark red with high luminous efficiency. [See A. Tsuboyama et al., J. Am. Chem. Soc. 2003, 125(42), 12971-12979.]

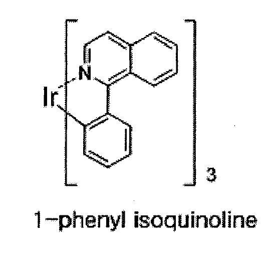

Moreover, the red materials, having no significant problem of life time, have tendency of easy commercialization if they have good color purity or luminous efficiency. Thus, the above-mentioned iridium complex is a material having very high possibility of commercialization due to its excellent color purity and luminous efficiency.

However, the iridium complex is still construed only as a material which is applicable to small displays, while higher levels of EL properties than those of known materials are practically required for an OLED panel of medium to large size.

### SUMMARY OF THE INVENTION

As a result of intensive efforts of the present inventors to overcome the problems of conventional techniques as described above, they have developed novel red phosphorescent compounds to realize an organic EL device having excellent luminous efficiency and surprisingly improved lifetime.

The object of the invention is to provide compounds having the skeletal to give more excellent electroluminescent properties as compared to those of conventional red phosphorescent materials. Another object of the invention is to provide novel phosphorescent compounds which are applicable to OLED panels of medium to large size.

Another object of the present invention is to provide an organic electroluminescent device comprising the
phosphorescent compound.

### Technical Solution

Thus, the present invention relates novel red phosphorescent compounds and organic electroluminescent devices employing the same in an electroluminescent layer. Specifically, the red phosphorescent compounds according to the invention are **characterized in that** they are represented by Chemical Formula 1: 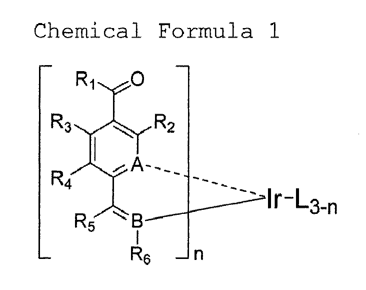 wherein, L is an organic ligand;
B is C if A is N, and B is N if A is C;
R₁ represents a linear or branched and a saturated or unsaturated (C₁-C₆₀)alkyl or (C₆-C₆₀)aryl;
R₂ through R₄ independently represent hydrogen, a linear or branched and a saturated or unsaturated (C₁-C₆₀)alkyl, (C₁-C₃₀)alkoxy, (C₃-C₆₀) cycloalkyl, (C₆-C₆₀) aryl, halogen, tri (C₁-C₃₀)alkylsilyl, di (C₁-C₃₀) alkyl (C₆-C₃₀) arylsilyl or tri (C₆-C₃₀)arylsilyl;
R₅ and R₆ independently represent hydrogen, a linear or branched (C₁-C₆₀)alkyl, (C₆-C₆₀)aryl or halogen, or R₅ and R₆ may be linked via (C₃-C₁₂)alkylene or (C₃-C₁₂)alkenylene with or without a fused ring to form an alicyclic ring, or a monocyclic or polycyclic aromatic ring; the alkyl or aryl of R₅ and R₆, or the alicyclic ring, or the monocyclic or polycyclic aromatic ring formed therefrom by linkage via (C₃-C₁₂)alkylene or (C₃-C₁₂)alkenylene with or without a fused ring may be further substituted by one or more substituent(s) selected from a linear or branched (C₁-C₆₀)alkyl with or without halogen substituent(s), (C₁-C₃₀)alkoxy, halogen, tri(C₁-C₃₀)alkylsilyl, di (C₁-C₃₀)alkyl (C₆-C₃₀) arylsilyl, tri (C₆-C₃₀) arylsilyl and (C₆-C₆₀)aryl;

the alkyl, alkoxy, cycloalkyl and aryl of R₁ through R₄ may be further substituted by one or more substituent(s) selected from a linear or branched (C₁-C₆₀)alkyl with or without halogen substituent(s), (C₁-C₃₀)alkoxy, halogen, tri(C₁-C₃₀)alkylsilyl, di(C₁-C₃₀) alkyl (C₆-C₃₀) arylsilyl, tri (C₆-C₃₀)arylsilyl and (C₆-C₆₀)aryl; and
n is an integer from 1 to 3.

The alicyclic ring, or the monocyclic or polycyclic aromatic ring formed from R₅ and R₆ of the compound of Chemical Formula (1) according to the present invention by linkage via (C₃-C₁₂)alkylene or (C₃-C₁₂)alkenylene with or without a fused ring may be benzene, naphthalene, anthracene, fluorene, indene, phenanthrene or pyridine. In Chemical Formula (1), the species enclosed by square brackets ([]) act as primary ligands of iridium, and L as subsidiary ligands. The phosphorescent compounds according to the present invention include the complexes with a ratio of primary ligand: subsidiary ligand = 2:1 (n=2), in addition to the tris-chelated complexes without subsidiary ligand (L) (n=3).

The organic phosphorescent compounds represented by Chemical Formula (1) according to the present invention may be exemplified by the compounds represented by one of Chemical Formulas (2) to (7): 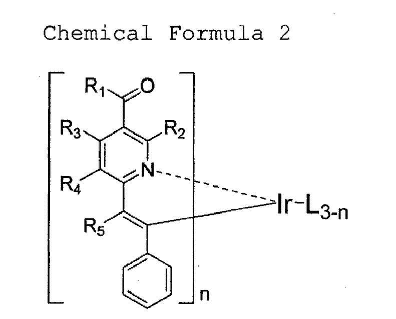 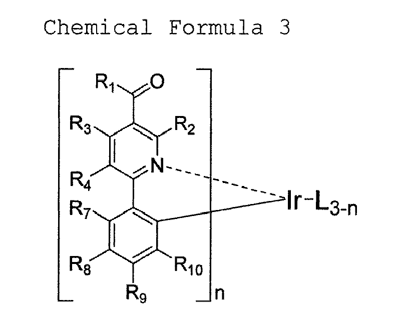 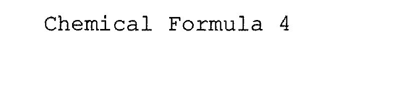 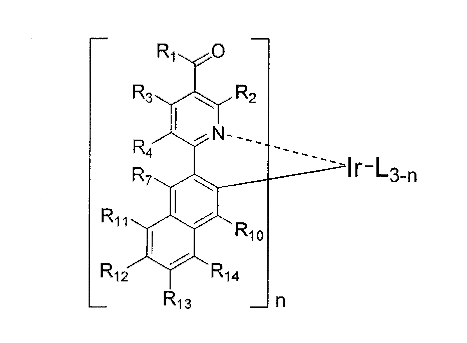 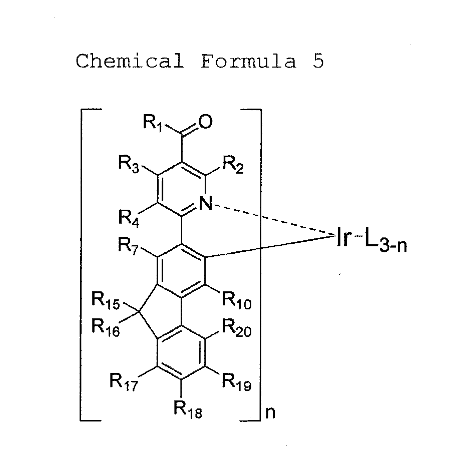 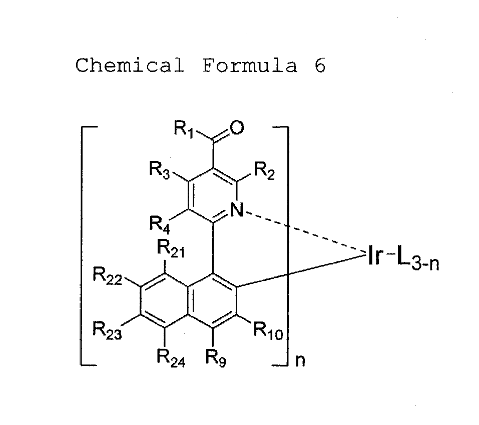 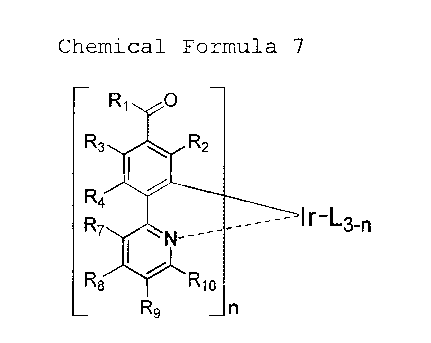 [wherein, L, R₁, R₂, R₃, R₄, R₅ and n are defined as in Chemical Formula (1);
R₇ through R₁₄ and R₁₇ through R₂₄ independently represent hydrogen, a linear or branched (C₁-C₆₀)alkyl with or without halogen substituent(s), (C₁-C₃₀)alkoxy, halogen, tri(C₁-C₃₀)alkylsilyl, di (C₁-C₃₀) alkyl (C₆-C₃₀) arylsilyl, tri(C₆-C₃₀)arylsilyl or (C₆-C₆₀)aryl; and
R₁₅ and R₁₆ independently represent hydrogen or a linear or branched (C₁-C₆₀)alkyl.]

An embodiment of the present invention is **characterized in that** R₁ of Chemical Formulas (2) to (7) represents methyl, ethyl, n-propyl, i-propyl, n-butyl, t-butyl, phenyl, biphenyl, naphthyl, t-butylphenyl or fluorophenyl; R₂ through R₅ independently represent hydrogen, methyl, ethyl, n-propyl, i-propyl, n-butyl or t-butyl; R₇ through R₁₄ and R₁₇ through R₂₄ independently represent hydrogen, methyl, ethyl, n-propyl, i-propyl, n-butyl, t-butyl, fluoro, methoxy, ethoxy, butoxy, phenyl, biphenyl, trimethylsilyl, triphenylsilyl or trifluoromethyl; R₁₅ and R₁₆ independently represent hydrogen or methyl.

The organic phosphorescent compounds of Chemical Formula (1) according to the present invention may be specifically exemplified by the following compounds, but are not restricted thereto: 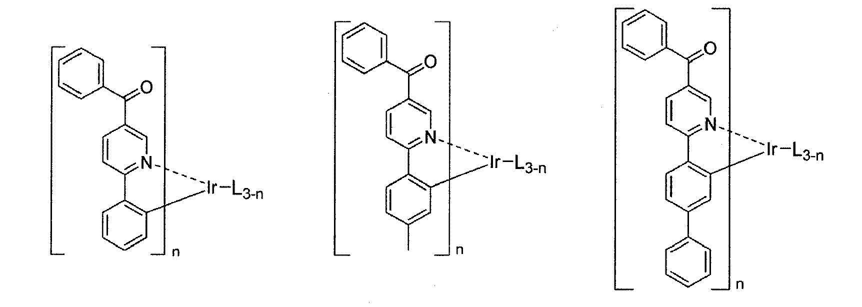 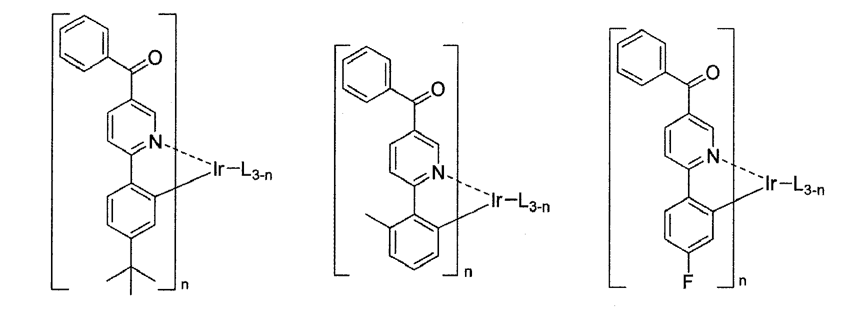 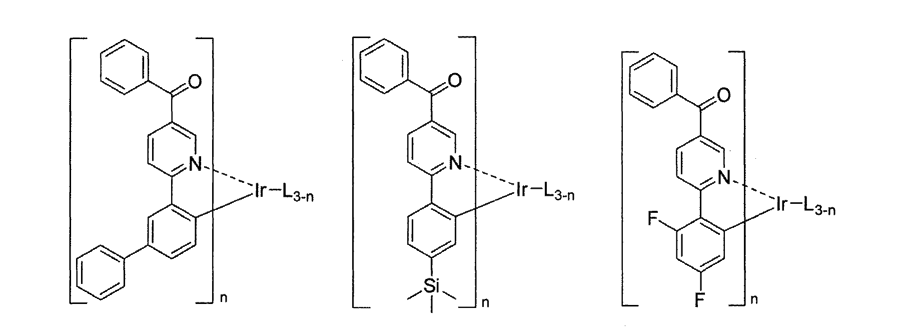 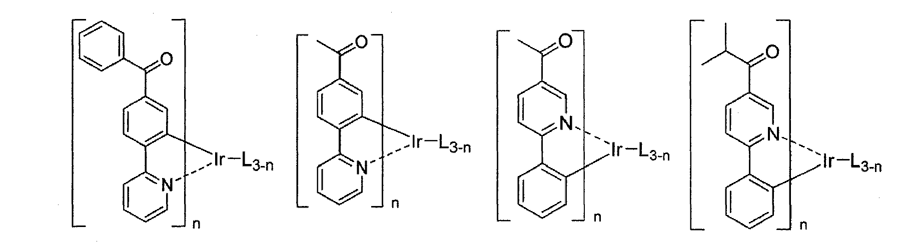 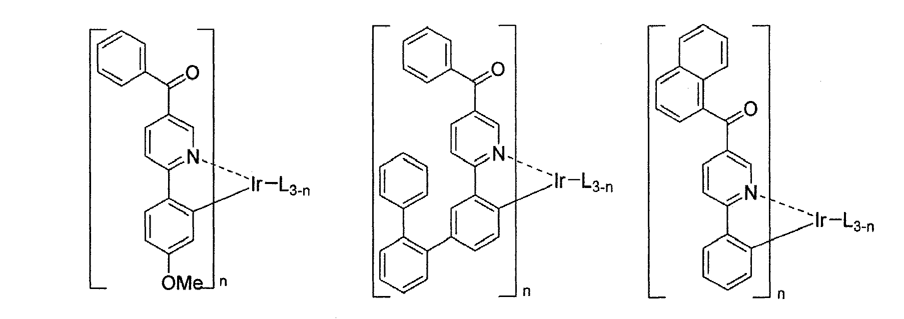 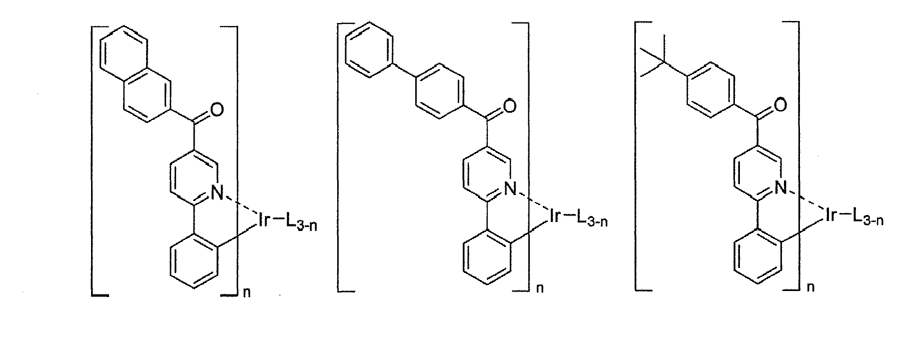 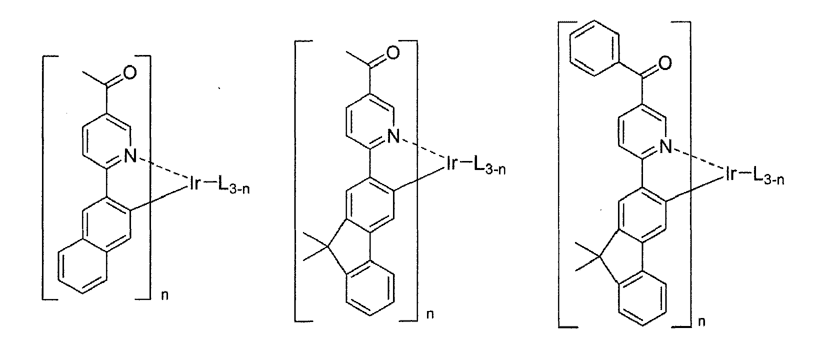 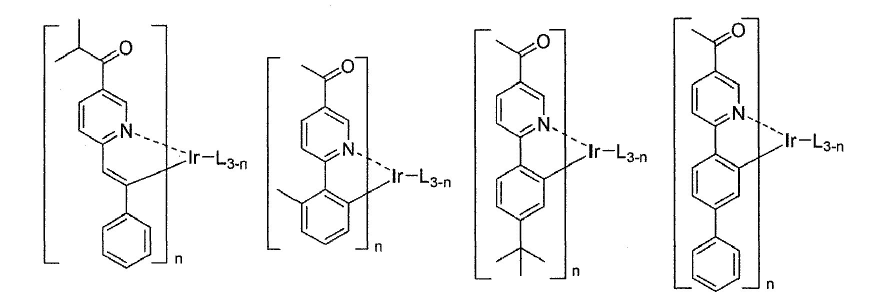 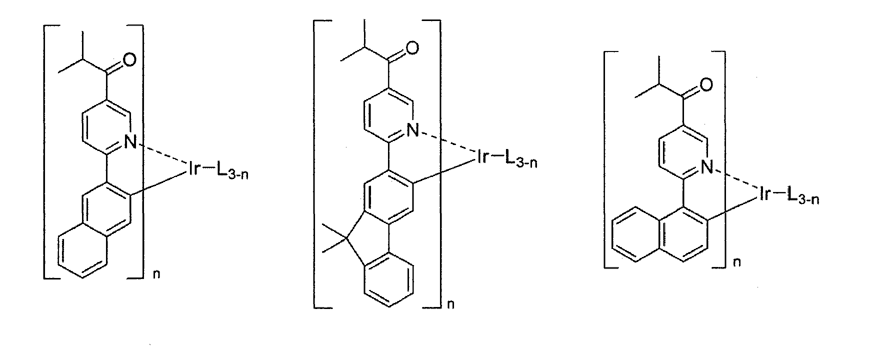 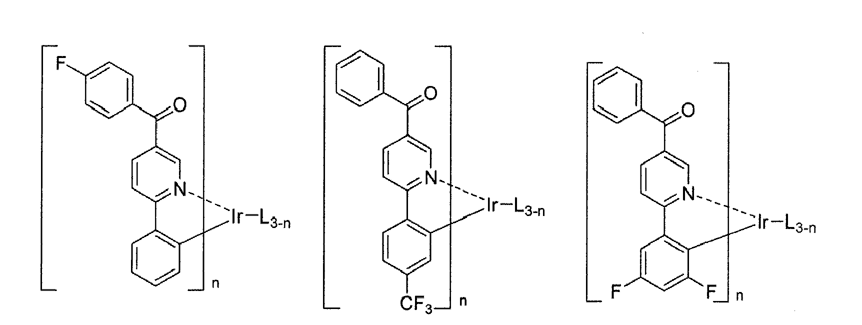 [wherein, L is an organic ligand, and n is an integer from 1 to 3.]

The subsidiary ligand L of Chemical Formula (1) according to the invention comprises one of the following structures: 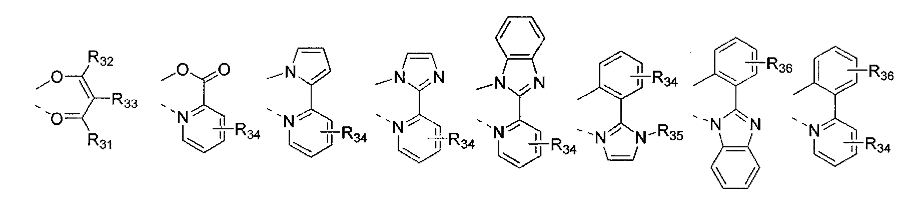 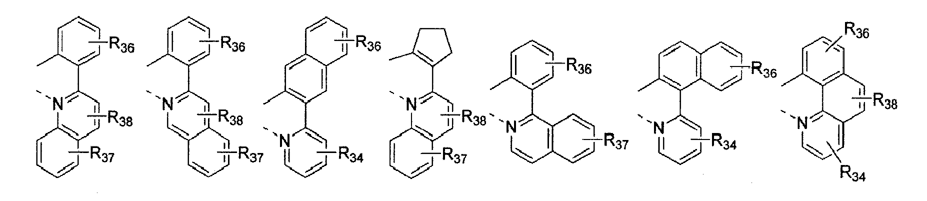 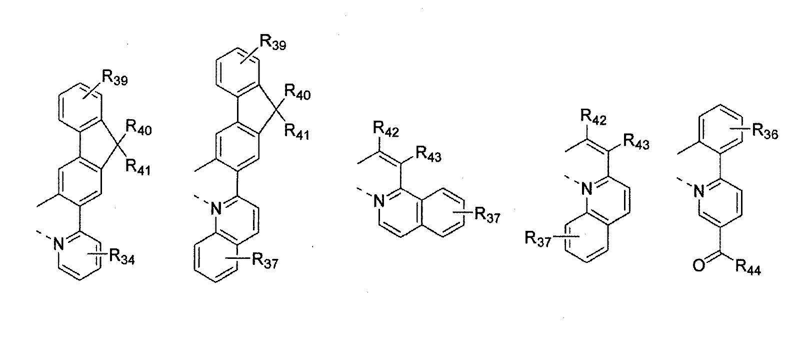 [wherein, R₃₁ and R₃₂ independently represent hydrogen, a linear or branched (C₁-C₆₀)alkyl with or without halogen substituent(s), phenyl with or without linear or branched (C₁-C₆₀)alkyl substituent(s), or halogen;
R₃₃ through R₃₉ independently represent hydrogen, a linear or branched (C₁-C₆₀)alkyl, phenyl with or without linear or branched (C₁-C₆₀)alkyl substituent(s), tri(C₁-C₃₀)alkylsilyl or halogen;
R₄₀ through R₄₃ independently represent hydrogen, a linear or branched (C₁-C₆₀)alkyl, phenyl with or without linear or branched (C₁-C₆₀)alkyl substituent(s); and
R₄₄ represents a linear or branched (C₁-C₆₀)alkyl, phenyl with or without linear or branched (C₁-C₆₀)alkyl substituent(s), or halogen.]

The subsidiary ligands (L) of Chemical Formula (1) according to the present invention may be exemplified by the following structures, but are not restricted thereto.

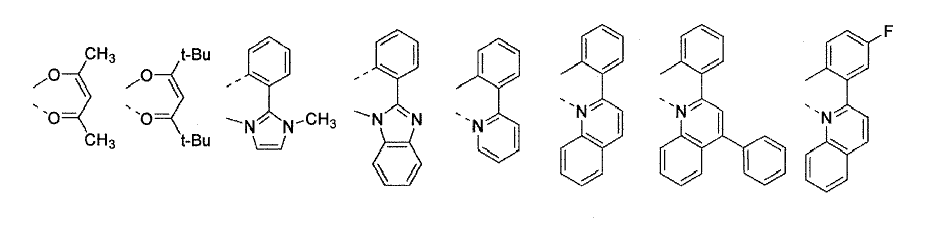

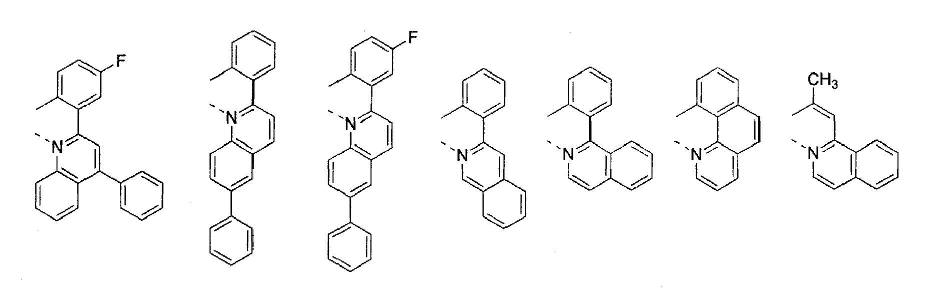

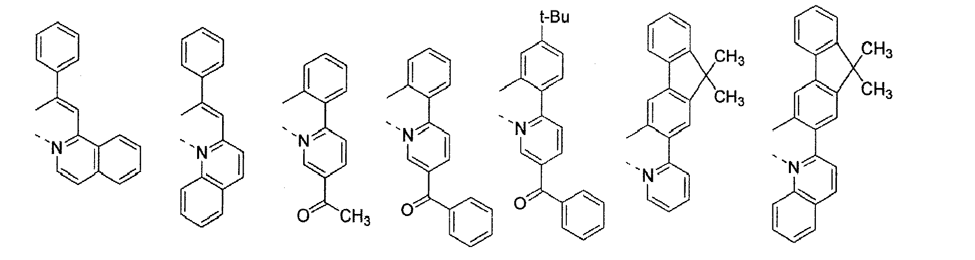

The process for preparing the organic phosphorescent compounds according to the present invention is described by referring to Reaction Schemes (1) to (3) shown below: 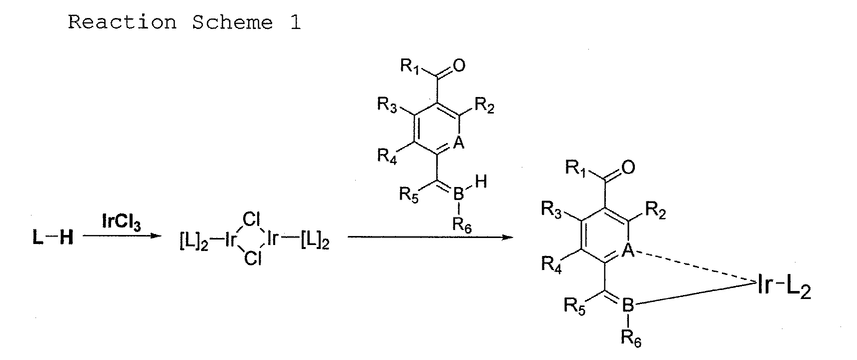 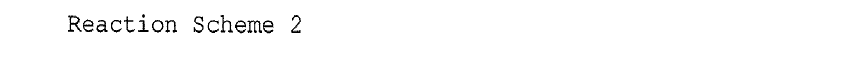 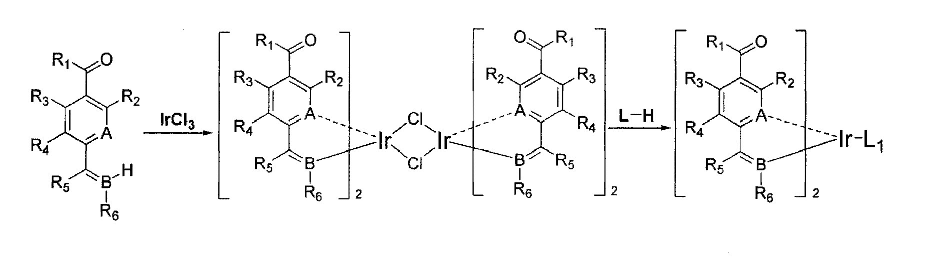 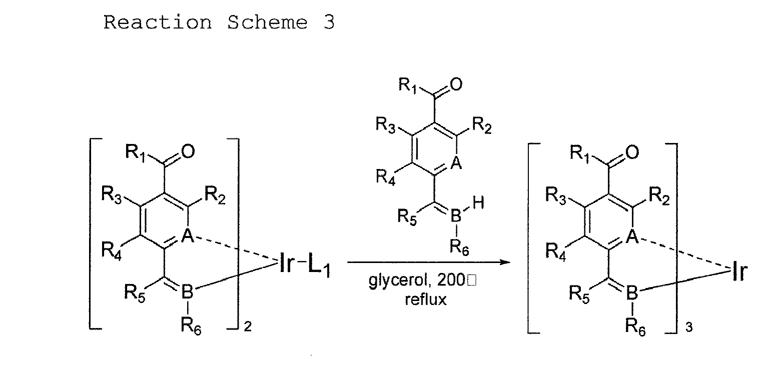 [wherein, A, B, R₁ through R₆ and L are defined as in Chemical Formula (1).]

Reaction Scheme (1) provides a compound of Chemical Formula (1) with n=1, in which iridium trichloride (IrCl₃) and a subsidiary ligand (L) compound are mixed in a solvent at a molar ratio of 1:2∼3, and the mixture is heated under reflux to obtain diiridium dimmer isolated. In the reaction stage, preferable solvent is alcohol or a mixed solvent of alcohol/water, such as 2-ethoxyethanol, and 2-ethoxyethanol/water mixtures. The isolated diiridium dimmer is then heated with a primary ligand compound in organic solvent to provide an organic phosphorescent iridium compound having the ratio of primary ligand: subsidiary ligand of 1:2 as the final product. The reaction is carried out with AgCF₃SO₃, Na₂CO₃ or NaOH being admixed with organic solvent such as 2-ethoxyethanol and 2-methoxyethylether.

Reaction Scheme (2) provides a compound of Chemical Formula (1) with n=2, in which iridium trichloride (IrCl₃) and a primary ligand compound are mixed in a solvent at a molar ratio of 1:2∼3, and the mixture is heated under reflux to obtain diiridium dimmer isolated. In the reaction stage, preferable solvent is alcohol or a mixed solvent of alcohol/water, such as 2-ethoxyethanol, and 2-ethoxyethanol/water mixture. The isolated diiridium dimmer is then heated with a subsidiary ligand (L) compound in organic solvent to provide an organic phosphorescent iridium compound having the ratio of primary ligand: subsidiary ligand of 2:1 as the final product.

The molar ratio of the primary ligand and the subsidiary ligand in the final product is determined by appropriate molar ratio of the reactant depending on the composition. The reaction may be carried out with AgCF₃SO₃, Na₂CO₃ or NaOH being admixed with organic solvent such as 2-ethoxyethanol, 2-methoxyethylether and 1,2-dichloromethane.

Reaction Scheme (3) provides a compound of Chemical Formula (1) with n=3, in which iridium complex prepared according to Reaction Scheme (2) and a primary ligand compound are mixed in glycerol at a molar ratio of 1:2∼3, and the mixture is heated under reflux to obtain organic phosphorescent iridium complex coordinated with three primary ligands.

The compounds employed as a primary ligand in the present invention can be prepared according to Reaction Scheme (4) or (5), on the basis of conventional processes. 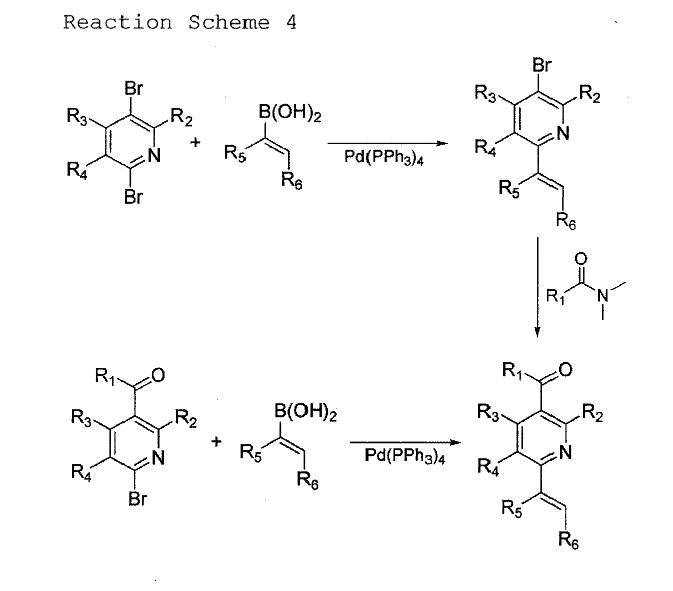 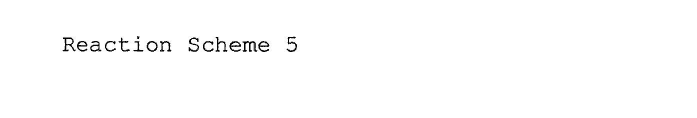 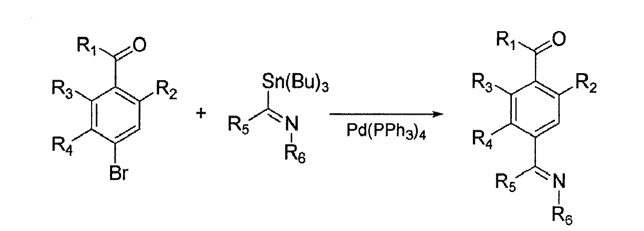 [wherein, R₁ through R₆ are defined as in Chemical Formula (1).]

The present invention provides an organic electroluminescent device which is comprised of a first electrode; a second electrode; and at least one organic layer(s) interposed between the first electrode and the second electrode; wherein the organic layer comprises one or more compound(s) represented by Chemical Formula (1).

The organic electroluminescent device according to the present invention is **characterized in that** the organic layer comprises an electroluminescent region, and the region comprises one or more compound(s) represented by Chemical Formula (1) as electroluminescent dopant in an amount from 0.01 to 10% by weight, and one or more host(s). The hosts which can be employed in an organic electroluminescent device according to the present invention are not particularly restricted, but are exemplified by 1,3,5-tricarbazolylbenzene, 4,4'-biscarbazolylbiphenyl(CBP), polyvinylcarbazole, m-biscarbazolylphenyl, 4,4'-biscarbazolyl-2,2'-dimethylbiphenyl, 4,4'4"-tri(N-carbazolyl)triphenylamine, 1,3,5-tri(2-carbazolylphenyl)benzene, 1,3,5-tris(2-carbazolyl-5-methoxyphenyl)benzene, bis(4-carbazolylphenyl)silane or the compounds represented by one of Chemical Formulas (8) to (11).

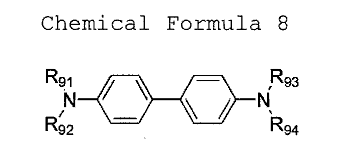

In Chemical Formula (8), R₉₁ through R₉₄ independently represent linear or branched and saturated or unsaturated (C1-C60)alkyl or (C6-C60)aryl, or each of them may be linked to an adjacent substituent via (C3-C12)alkylene or (C3-C12) alkenylene with or without a fused ring to form an alicyclic ring, or a monocyclic or polycyclic aromatic ring; and the alkyl or aryl of R₉₁ through R₉₄, or the alicyclic ring, or the monocyclic or polycyclic aromatic ring formed therefrom by linkage via (C3-C12)alkylene or (C3-C12)alkenylene with or without a fused ring may be further substituted by one or more substituent(s) selected from linear or branched (C1-C60)alkyl with or without halogen substituent(s), tri(C1-C30)alkylsilyl, tri(C6-C30)arylsilyl and (C6-C60)aryl.

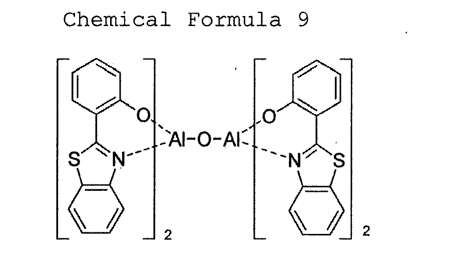

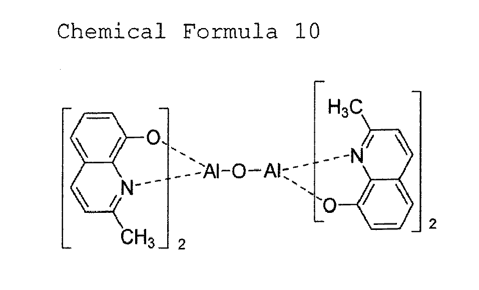

### Chemical Formula 11

L¹L²M¹(Q)_{y}

In Chemical Formula (11), the ligands, L¹ and L² are independently selected from the following structures; 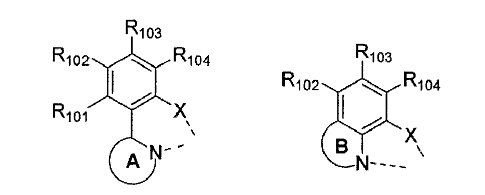 wherein, M¹ is a bivalent or trivalent metal;
y is 0 when M¹ is a bivalent metal, while y is 1 when M¹ is a trivalent metal;
Q represents (C6-C60)aryloxy or tri(C6-C60)arylsilyl, and the aryloxy and triarylsilyl of Q may be further substituted by linear or branched (C1-C60)alkyl or (C6-C60)aryl;
X represents O, S or Se;
ring A represents oxazole, thiazole, imidazole, oxadiazole, thiadiazole, benzoxazole, benzothiazole, benzimidazole, pyridine or quinoline;
ring B represents pyridine or quinoline, and ring B may be further substituted by linear or branched (C1-C60)alkyl, or phenyl or naphthyl with or without linear or branched (C1-C60)alkyl substituent(s);
R₁₀₁ through R₁₀₄ independently represent hydrogen, linear or branched (C1-C60)alkyl, halogen, tri(C1-C30)alkylsilyl, tri(C6-C30)arylsilyl or (C6-C60)aryl, or each of them may be linked to an adjacent substituent via (C3-C12)alkylene or (C3-C12)alkenylene to form a fused ring; and the pyridine or quinoline may form a chemical bond with R₁₀₁ to form a fused ring;
the aryl group of ring A and R₁₀₁ through R₁₀₄ may be further substituted by linear or branched (C1-C60)alkyl, halogen, linear or branched (C1-C60)alkyl with halogen substituent(s), phenyl, naphthyl, tri(C1-C30)alkylsilyl, tri(C6-C30)arylsilyl or amino group.
The ligands, L¹ and L² are independently selected from the following structures. 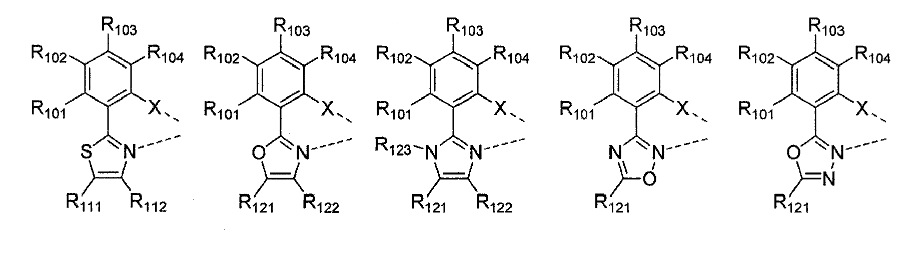 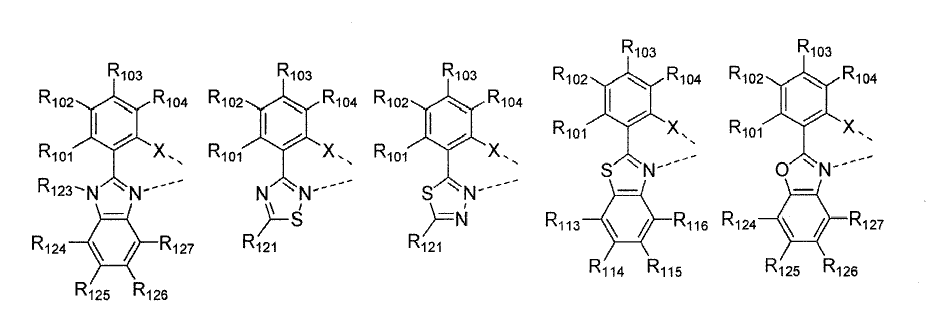 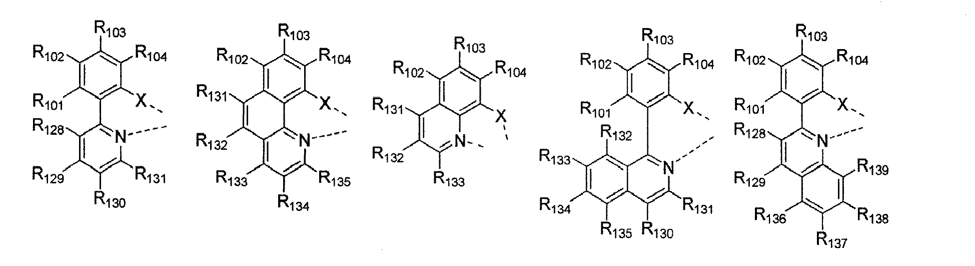 wherein, X represents O, S or Se;
R₁₀₁ through R₁₀₄ independently represent hydrogen, (C1-C60)alkyl with or without halogen substituent(s), halogen, (C6-C60)aryl, (C4-C60)heteroaryl, tri(C1-C30)alkylsilyl, di(C1-C30)alkyl(C6-C30)arylsilyl, tri(C6-C30)arylsilyl, di(C1-C30)alkylamino, di(C6-C30)arylamino, thiophenyl or furanyl, or each of them may be linked to an adjacent substituent via (C3-C12)alkylene or (C3-C12)alkenylene with or without a fused ring to form a fused ring;
R₁₁₁ through R₁₁₆, R₁₂₁ and R₁₂₂ independently represent hydrogen, (C1-C60)alkyl, halogen, (C1-C60)alkyl with halogen substituent(s), phenyl, naphthyl, biphenyl, fluorenyl, tri(C1-C30)alkylsilyl, di(C1-C30)alkyl(C6-30)arylsilyl, tri(C6-C30)arylsilyl, di(C1-C30)alkylamino, di(C6-C30)arylamino, thiophenyl or furanyl;
R₁₂₃ represents (C1-C60)alkyl, phenyl or naphthyl;
R₁₂₄ through R₁₃₉ independently represent hydrogen, (C1-C60)alkyl, halogen, (C1-C60)alkyl with halogen substituent(s), phenyl, naphthyl, biphenyl, fluorenyl, tri(C1-C30)alkylsilyl,
di(C1-C30)alkyl(C6-30)arylsilyl, tri(C6-C30)arylsilyl, di(C1-C30)alkylamino, di(C6-C30)arylamino, thiophenyl or furanyl; and
the phenyl, naphthyl, biphenyl, fluorenyl, thiophenyl or furanyl of R₁₁₁ through R₁₁₆ and R₁₂₁ through R₁₃₉ may be further substituted by one or more substituent(s) selected from (C1-C60)alkyl, halogen, naphthyl, fluorenyl, tri(C1-C30)alkylsilyl,
di(C1-C30)alkyl(C6-30)arylsilyl, tri(C6-C30)arylsilyl, di(C1-C30)alkylamino and di(C6-C30)arylamino.

In Chemical Formula (11), M¹ is a bivalent metal selected from Be, Zn, Mg, Cu and Ni, or a trivalent metal selected from Al, Ga, In and B, and Q is selected from the following structures.

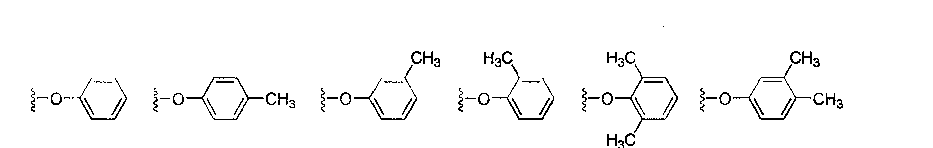

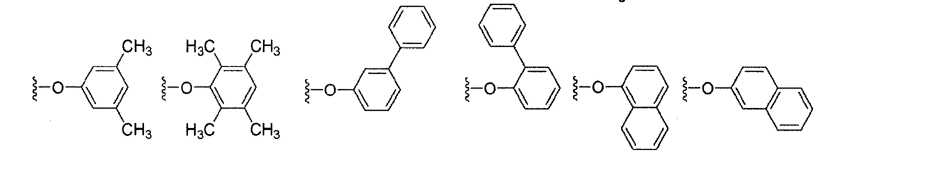

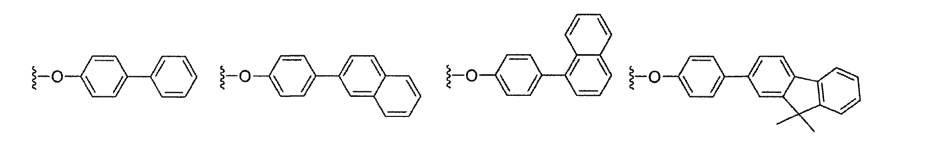

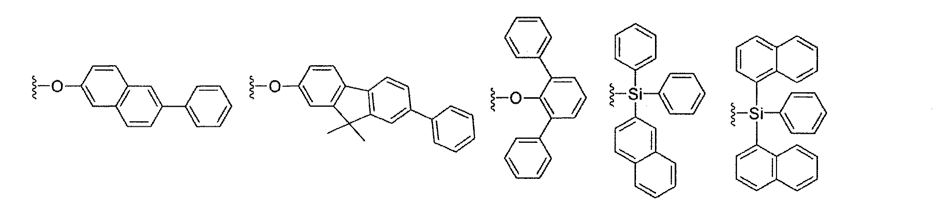

The compounds of Chemical Formula (8) may be specifically exemplified by the compounds represented by one of the following structural formulas, but they are not restricted thereto.

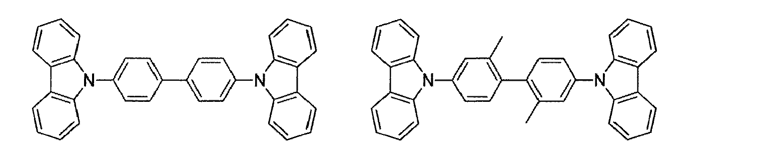

The compounds represented by Chemical Formula (11) may be specifically exemplified by the compounds with one of the following structures, but they are not restricted thereto.

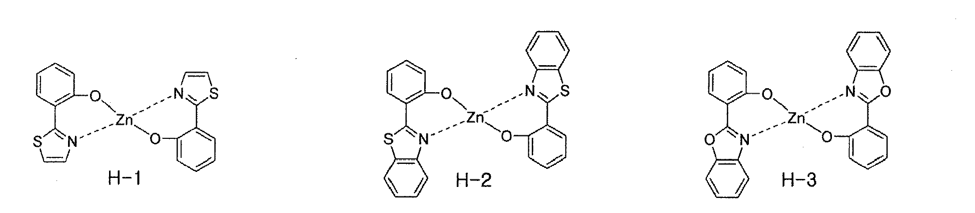

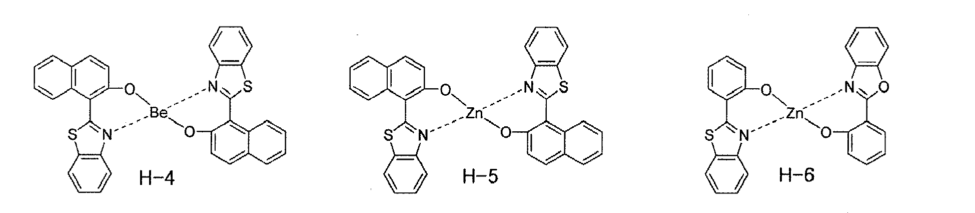

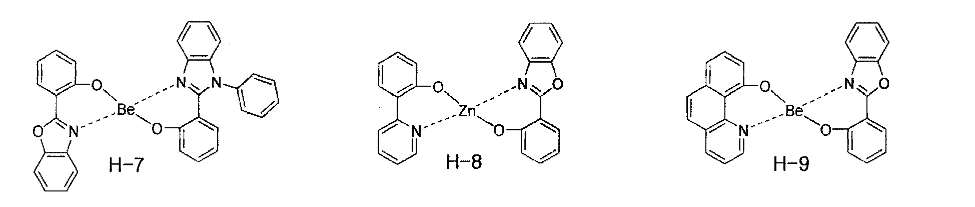

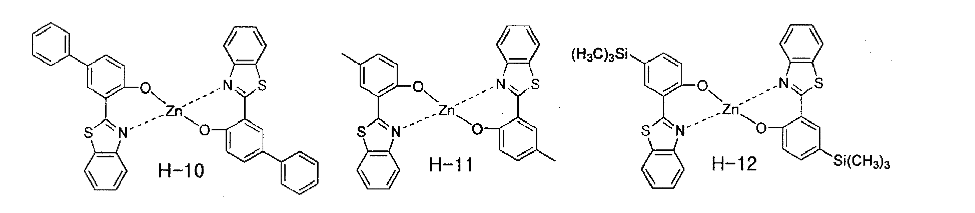

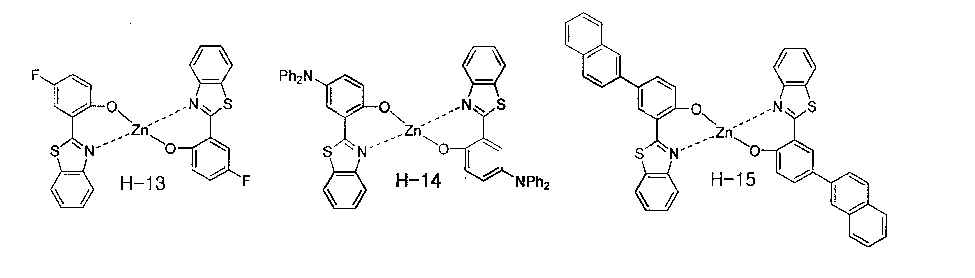

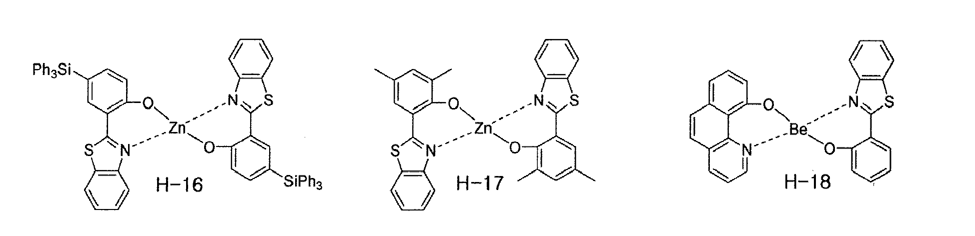

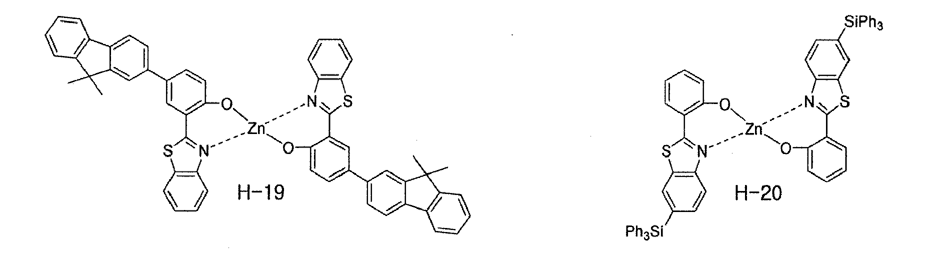

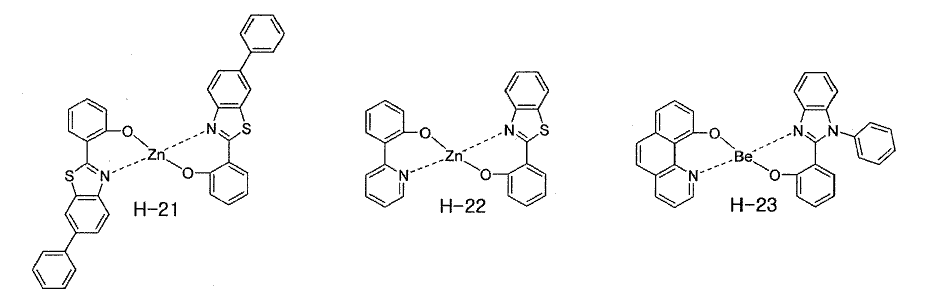

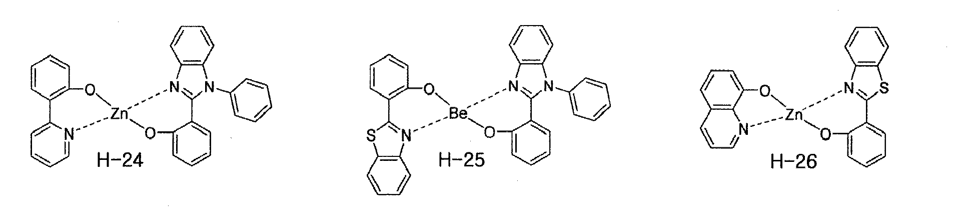

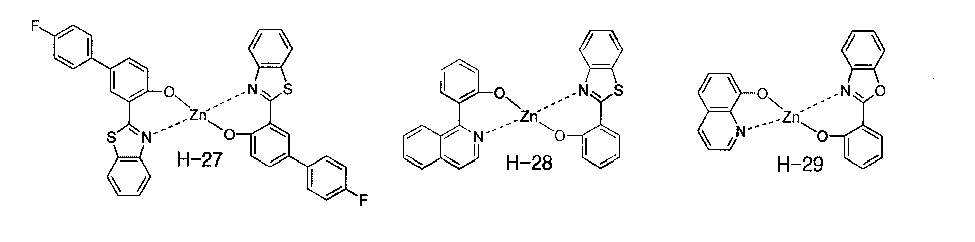

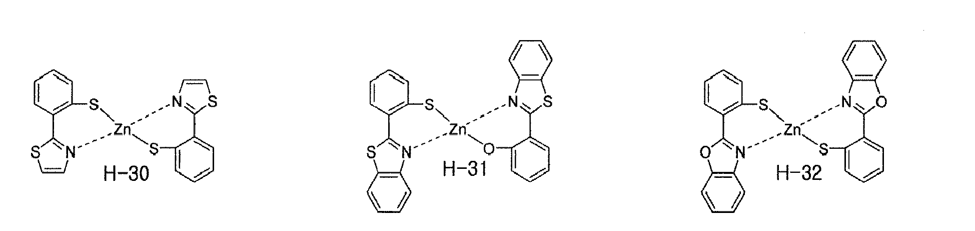

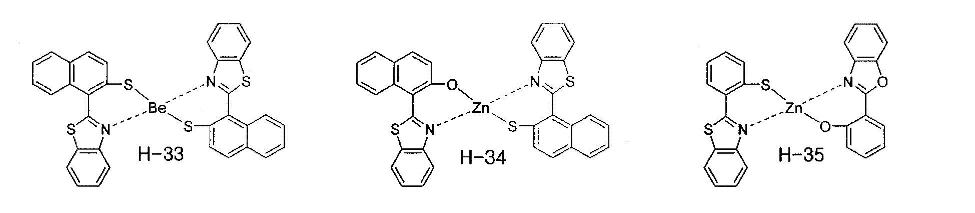

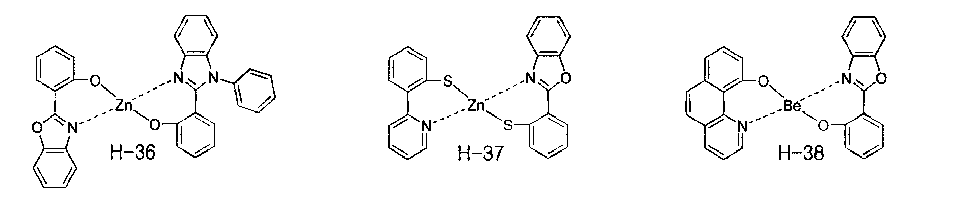

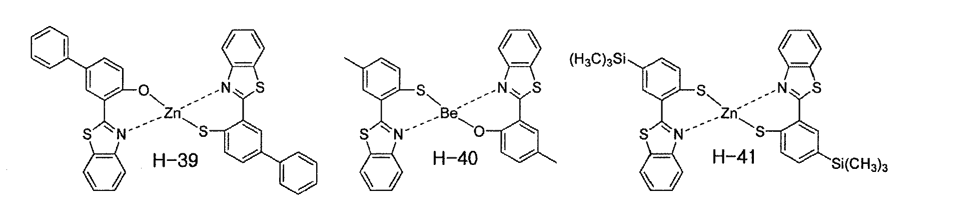

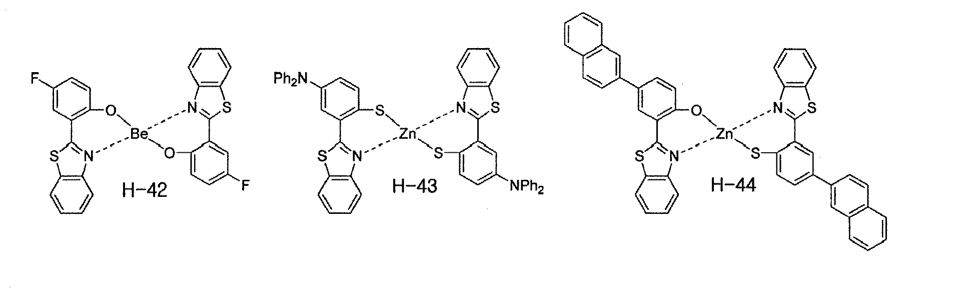

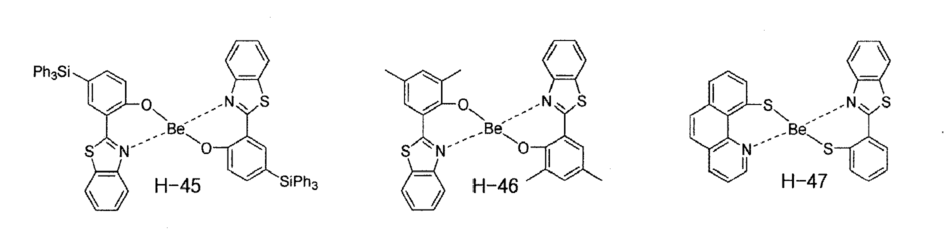

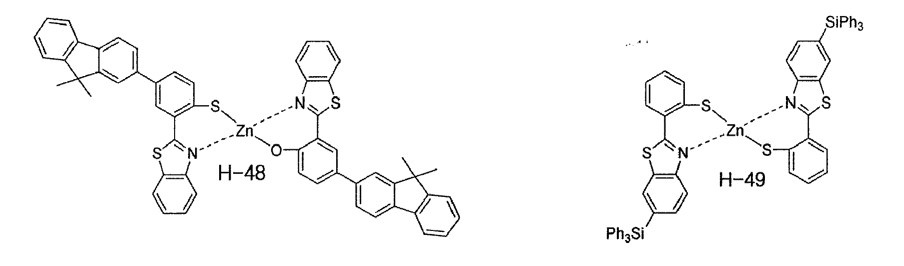

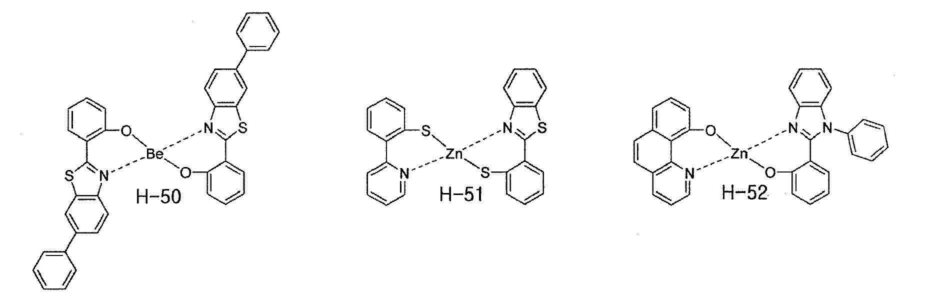

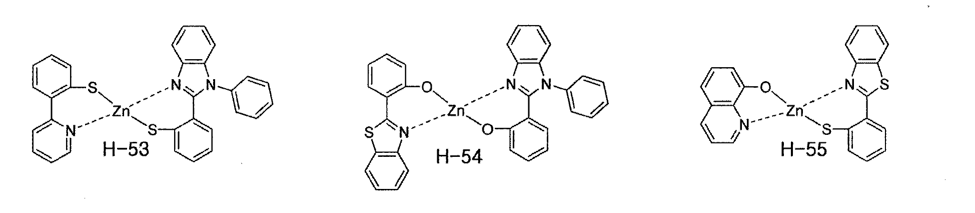

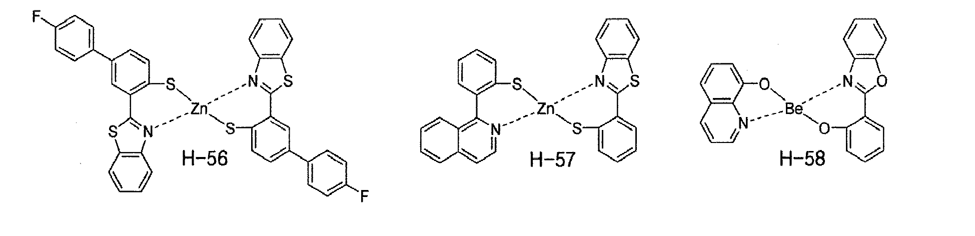

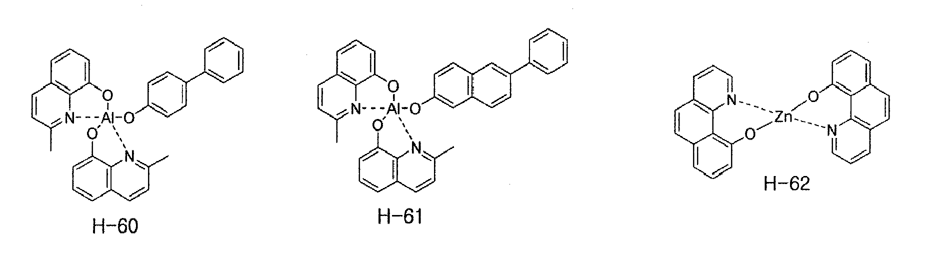

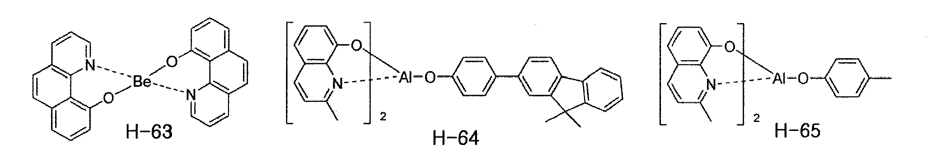

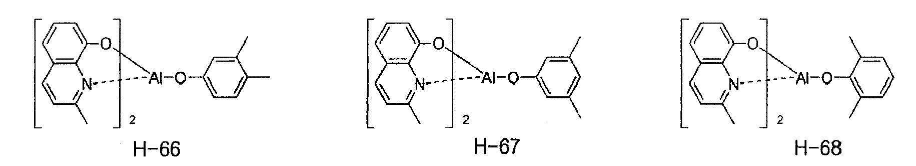

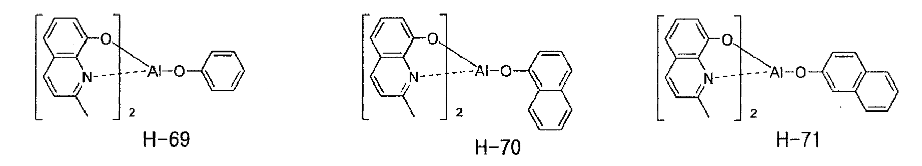

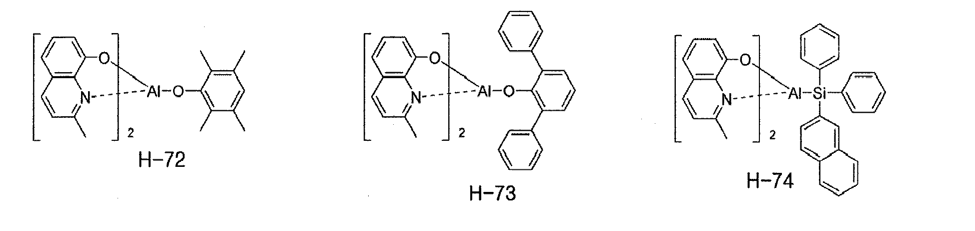

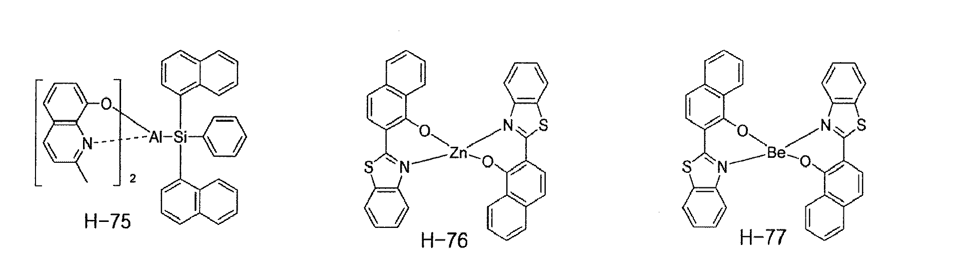

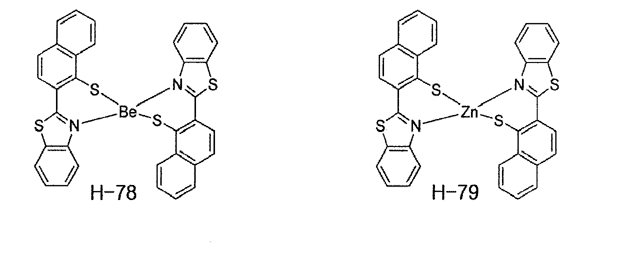

### BRIEF DESCRIPTION OF THE DRAWINGS

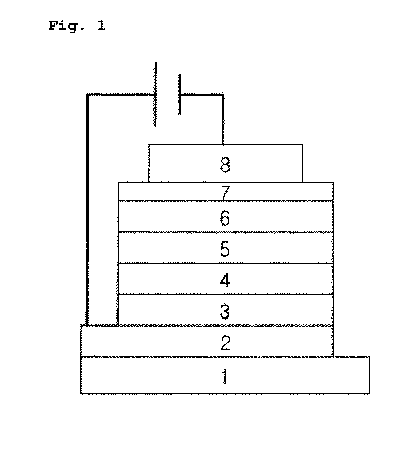

Fig. 1 is a cross-sectional view of an OLED.

### DETAILED DESCRIPTION OKF THE INVENTION

Referring now to the Drawings, Fig. 1 illustrates a an OLED comprising a Glass 1, a Transparent electrode 2, a Hole injection layer 3, a Hole transportation layer 4, an Electroluminescent layer 5, an Electron transport layer 6, a Electron injection layer 7 and Al cathode 8.

The present invention is further described with respect to the processes for preparing novel organic phosphorescent compounds according to the invention by referring to Examples, which are provided for illustration only but are not intended to limit the scope of the invention by any means.

### Preparation Examples

### [Preparation Example 1] Preparation of Compound (101)

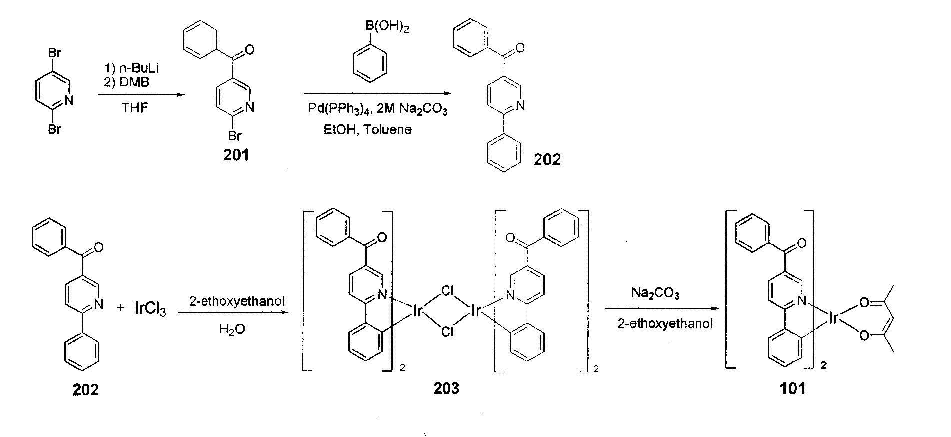

### Preparation of Compound (201)

A 2000 mL round-bottomed flask was charged with 2,5-dibromopyridine (25.0 g, 105 mmol), which was then dissolved with diethyl ether (1240 mL) under argon atmosphere. Under the temperature condition of -75°C, n-BuLi (80 mL) (1.6 M in hexane, 127 mmol) was slowly added dropwise thereto. After stirring for 30 minutes, a solution of N,N-dimethylbenzamide (23.6 g, 158 mmol) dissolved in diethyl ether (200 mL) was slowly added, and the resultant mixture was stirred for 35 minutes. When the reaction was completed, aqueous NH₄Cl solution was added to the reaction mixture. Extraction with diethyl ether and purification via silica gel column chromatography gave Compound (201) (18.0 g, 68.9 mmol, yield: 65.6%).

### Preparation of Compound (202)

A 500 mL round-bottomed flask was charged with Compound (201) (18.0 g, 68.9 mmol), phenylboronic acid (9.24 g, 75.8 mmol), toluene (160 mL), ethanol (80 mL) and Pd(PPh₃)₄ (3.18 g, 2.76 mmol), and the mixture was stirred under argon atmosphere. After adding aqueous 2 M Na₂CO₃ solution (80 mL), the resultant mixture was heated under reflux with stirring for 4 hours. When the reaction was completed, distilled water was added. Extraction with ethyl acetate and purification via silica gel column chromatography gave Compound (202) (15.5 g, 59.6 mmol, yield 86.5%).

### Preparation of Compound (203)

A 500 mL round-bottomed flask was charged with Compound (202) (15.5 g, 59.6 mmol), iridium chloride (IrCl₃) (8.09 g, 27.1 mmol), 2-ethoxyethanol (210 mL) and distilled water (70 mL), and the mixture was heated under reflux and argon atmosphere for 24 hours. When the reaction was completed, the reaction mixture was cooled to ambient temperature. The precipitate was filtered and completely dried to obtain Compound (203) (18.2 g, 24.4 mmol).

### Preparation of Compound (101)

A 500 mL round-bottomed flask was charged with Compound (203) (18.2 g, 24.4 mmol), 2,4-pentanedione (3.67 g, 36.6 mmol), Na₂CO₃ (7.76 g, 73.2 mmol) and 2-ethoxyethanol (300 mL), and the mixture was heated for 4 hours. When the reaction was completed, the reaction mixture was cooled to room temperature. The solid precipitate was filtered and purified via silica gel column chromatography and recrystallization to obtain the title compound, iridium complex (101) (8.47 g, 10.5 mmol, yield: 38.6%) as red crystals.
mp. > 350°C

¹H NMR(300 MHz, CDCl₃) : δ = 8.89 (d, *J* = 1.2 Hz, 2H), 8.30 (dd, *J* = 1.8 Hz, 8.4 Hz, 2H), 7.98 (d, *J* = 8.7 Hz, 2H), 7.83-7.80 (m, 4H), 7.65-7.58 (m, 4H) 7.53-7.48 (m, 4H), 6.86 (td, *J* = 1.2 Hz, 7.5 Hz, 2H), 6.74 (td, *J* = 1.5 Hz, 7.5 Hz, 2H), 6.30 (dd, *J* = 1.2 Hz, 7.8 Hz, 2H), 5.29 (s, 1H), 1.55 (s, 6H).

HRMS(FAB) calcd for C₄₁H₃₁IrN₂O₄ 808.1913 : found, 808.1910

### [Preparation Example 2] Preparation of Compound (131)

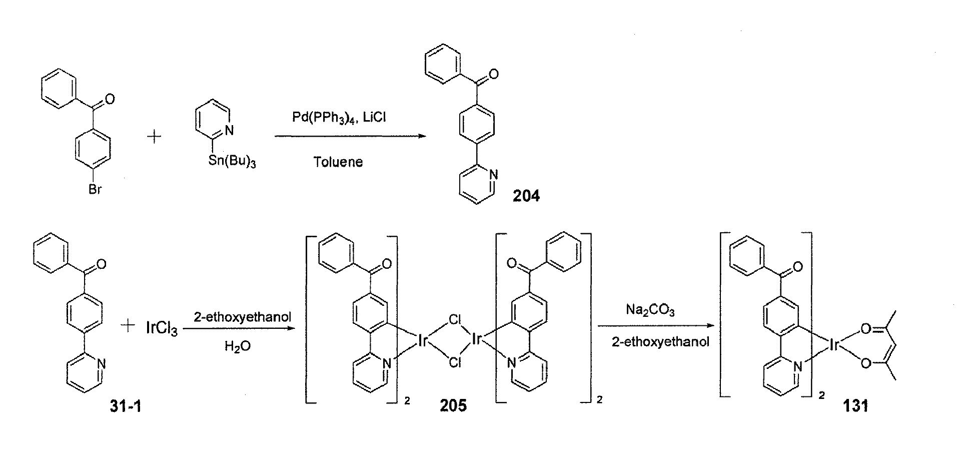

### Preparation of Compound (204)

A 500 mL round-bottomed flask was charged with 4-bromobenzophenone (17.0 g, 65.2 mmol), Pd(PPh₃)₄ (3.14 g, 2.72 mmol) and LiCl (69.0 g, 163 mmol), and the mixture was stirred with toluene (250 mL) under argon atmosphere. After 5 minutes, solution of tributyl(2-pyridyl)tin (20.0 g, 54.3 mmol) dissolved in toluene (20 mL) was added dropwise thereto. The mixture was stirred under reflux for 18 hours, and then cooled to room temperature. When the reaction was completed, aqueous KF solution was added to the reaction mixture. Extraction with ethyl acetate and purification via silica gel column chromatography gave Compound (204) (11.9 g, 45.9 mmol, yield: 84.5%).

### Preparation of Compound (205)

A 500 mL round-bottomed flask was charged with Compound (204) (11.9 g, 45.9 mmol), iridium chloride (IrCl₃) (6.24 g, 20.9 mmol), 2-ethoxyethanol (210 mL) and distilled water (70 mL), and the mixture was heated under reflux and argon atmosphere for 24 hours. When the reaction was completed, the reaction mixture was cooled to ambient temperature. The precipitate was filtered and completely dried to obtain Compound (205) (10.6 g, 14.2 mmol).

### Preparation of Compound (131)

A 500 mL round-bottomed flask was charged with Compound (205) (10.6 g, 14.2 mmol), 2,4-pentanedione (2.13 g, 21.3 mmol), Na₂CO₃ (4.52 g, 42.6 mmol) and 2-ethoxyethanol (300 mL), and the mixture was heated for 6 hours. When the reaction was completed, the reaction mixture was cooled to room temperature. The solid precipitate was filtered and purified via silica gel column chromatography. Recrystallization gave the title compound, iridium complex (131) (9.19 g, 11.4 mmol, yield: 54.4%) as red crystals.
mp. > 350°C

¹H NMR(300 MHz, CDCl₃) : δ = 8.51-8.49 (m, 2H), 7.86 (d, *J* = 8.1 Hz, 2H), 7.68 (dd, *J* = 1.5 Hz, 7.5 Hz, 2H), 7.63 (d, *J* = 8.4 Hz, 2H), 7.57-7.54 (m, 4H), 7.49-7.44 (m, 2H), 7.34-7.28 (m, 6H), 7.16-7.11 (m, 2H), 6.59 (d, *J* = 1.5 Hz, 2H), 5.25 (s, 1H), 1.80 (s, 6H)
HRMS(FAB) calcd for C₄₁H₃₁IrN₂O₄ 808.1913 : found, 808.1918.

### [Preparation Example 3] Preparation of Compound (149)

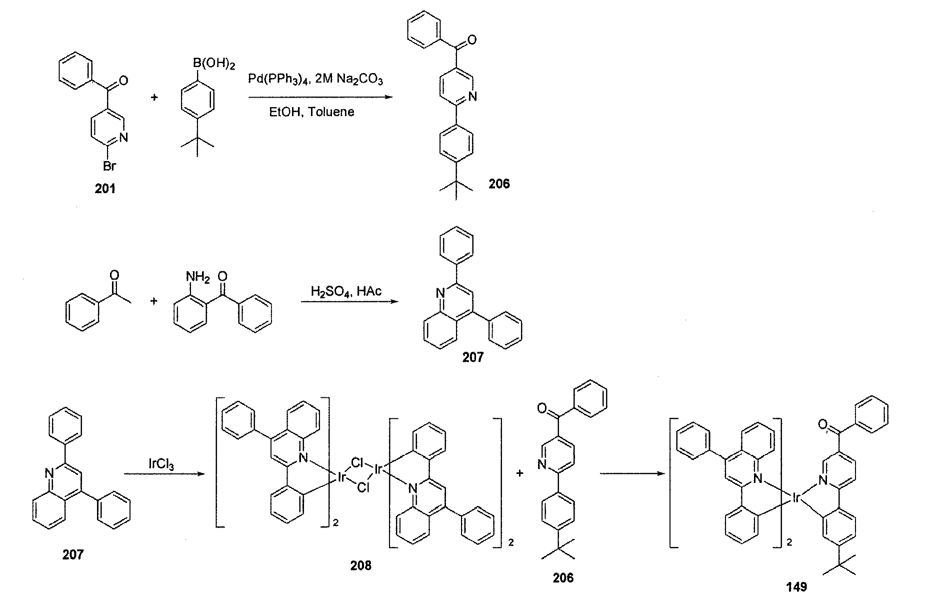

### Preparation of Compound (206)

A 500 mL round-bottomed flask was charged with Compound (201) (18.0 g, 68.9 mmol), 4-t-butylphenylboronic acid (13.5 g, 75.8 mmol), toluene (160 mL), ethanol (80 mL) and Pd(PPh₃)₄ (3.18 g, 2.76 mmol) and aqueous 2 M Na₂CO₃ solution (80 mL). According to the same procedure as described in Preparation 1, obtained was Compound (206) (17.8 g, 56.5 mmol, yield: 82.0%).

### Preparation of Compound (207)

Acetophenone (50 g, 416 mmol) and o-aminobenzophenone (82 g, 416 mmol) were stirred under reflux with concentrated sulfuric acid (4 mL) and glacial acetic acid (600 mL) for 24 hours. After cooling to room temperature, the reaction mixture was washed with cold concentrated ammonium hydroxide (450 mL) and distilled water (1.6 L). The precipitate was collected, and recrystallized from ethanol and water to obtain Compound (207) (81.9 g, 291 mmol).

### Preparation of Compound (208)

Compound (207) (81.9 g, 291 mmol), iridium chloride (IrCl₃) (39.1 g, 131 mmol), 2-ethoxyethanol (600 mL) and distilled water (200 mL) were stirred under reflux for 24 hours, and the reaction mixture was cooled to room temperature. The precipitate was washed with water and methanol, and filtered, and recrystallized from hexane to obtain Compound (208) (67.8 g, 43 mmol).

### Preparation of Compound (149)

Compound (208) (67.8 g, 43 mmol) and Compound (206) (40.7 g, 129 mmol), AgCF₃SO₃ (27.6 g, 107.5 mmol) and 2-methoxy ethylether (500 mL) were stirred under reflux for 12 hours. After cooling to room temperature, the reaction mixture was washed with water and methanol. The solid obtained was dissolved in methylene chloride, and purified via silica gel column chromatography to obtain the title compound, iridium complex (149) (32 g, 30 mmol, 35%) as red crystals.
mp. 350 〉 °C

¹H NMR (300 MHz, CDCl₃): δ = 9.03(s, 1H), 8.1(d, *J* = 8.1 Hz, 2H), 8.01(d, *J* = 7.6 Hz, 1H), 8(d, *J* = 7.5 Hz, 2H), 7.91-7.81(m, 6H), 7.7(d, *J* = 8.1 Hz, 2H), 7.6-7.4 (m, 13H), 7.3-7.2(m, 12H), 1.34(s, 9H)
HRMS (FAB) calcd for C₆₄H₄₈IrN₃O 1067.00 : found, 1067.34

### [Preparation Example 4 - 70]

The organic electroluminescent compounds listed in Table 1 were prepared according to the procedures described in Preparation Example 1 - 3, and the ¹H NMR, melting point (mp.) and MS/FAB data of the compounds are shown in Table 2.

**Table 1**

| | | | | | | | | |
|---|---|---|---|---|---|---|---|---|
| 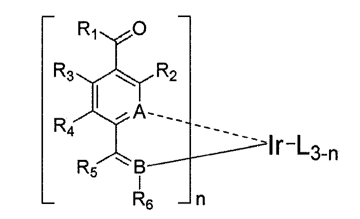 | | | | | | | | |

| Comp. No. | R₁ | R₂ | R₃ | R₄ | **A**--- | | L | n |
|---|---|---|---|---|---|---|---|---|
| 101 | 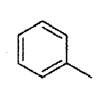 | H | H | H | **N**--- | 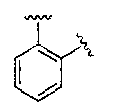 | 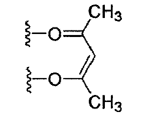 | 2 |
| 102 | 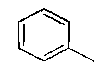 | H | H | H | **N**--- | 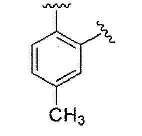 | 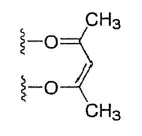 | 2 |
| 103 | 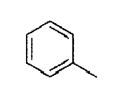 | H | H | H | **N**--- | 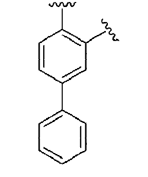 | 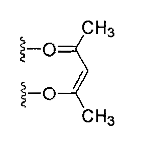 | 2 |
| 104 | 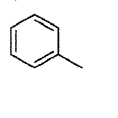 | H | H | H | **N**--- | 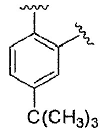 | 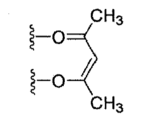 | 2 |
| 105 | 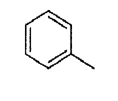 | H | H | H | **N**--- | 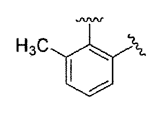 | 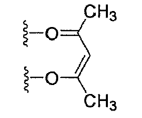 | 2 |
| 106 | 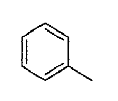 | H | H | H | **N**--- | 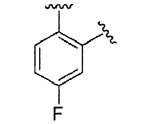 | 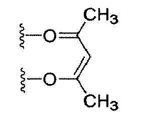 | 2 |
| 107 | 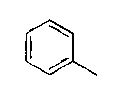 | H | H | H | **N**--- | 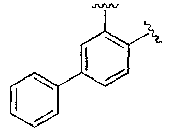 | 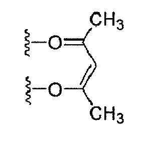 | 2 |
| 108 | 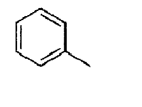 | H | H | H | **N**--- | 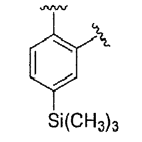 | 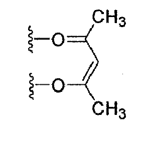 | 2 |
| 109 | 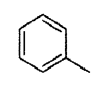 | H | H | H | **N**--- | 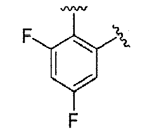 | 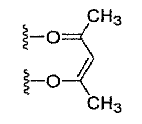 | 2 |
| 110 | 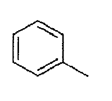 | H | H | H | **N**--- | 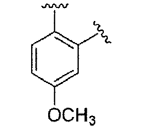 | 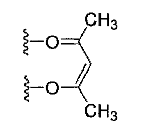 | 2 |
| 111 | 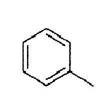 | H | H | H | **N**--- | 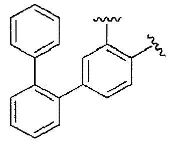 | 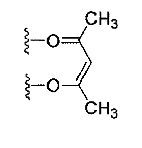 | 2 |
| 112 | 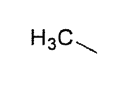 | H | H | H | **N**--- | 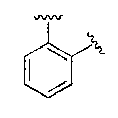 | 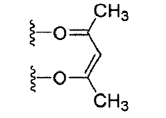 | 2 |
| 113 | 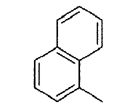 | H | H | H | **N**--- | 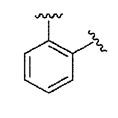 | 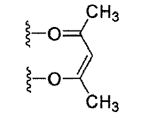 | 2 |
| 114 | 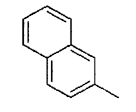 | H | H | H | **N**--- | 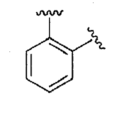 | 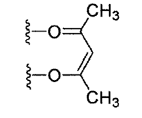 | 2 |
| 115 | 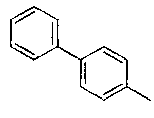 | H | H | H | **N**--- | 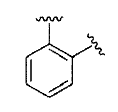 | 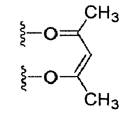 | 2 |
| 116 | 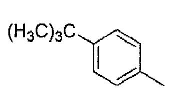 | H | H | H | **N**--- | 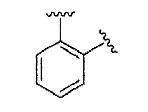 | 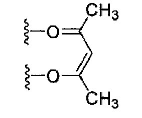 | 2 |
| 117 | 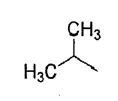 | H | H | H | **N**--- | 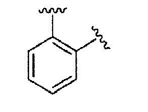 | 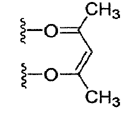 | 2 |
| 118 | 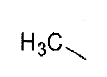 | H | H | H | **N**--- | 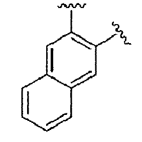 | 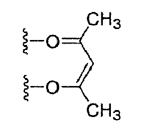 | 2 |
| 119 | 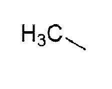 | H | H | H | **N**--- | 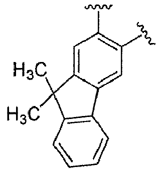 | 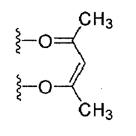 | 2 |
| 120 | 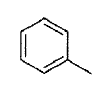 | H | H | H | **N**--- | 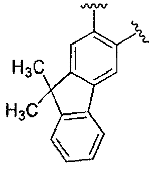 | 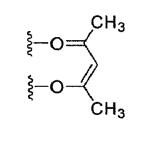 | 2 |
| 121 | 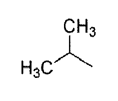 | H | H | H | **N**--- | 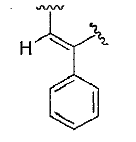 | 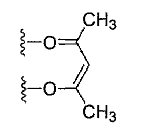 | 2 |
| 122 | 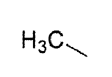 | H | H | H | **N**--- | 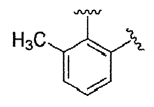 | 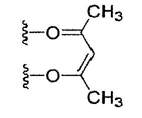 | 2 |
| 123 | 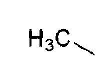 | H | H | H | **N**--- | 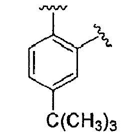 | 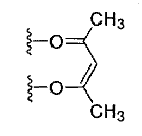 | 2 |
| 124 | 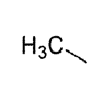 | H | H | H | **N**--- | 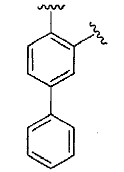 | 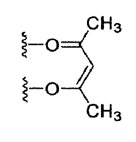 | 2 |
| 125 | 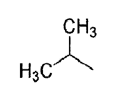 | H | H | H | **N**--- | 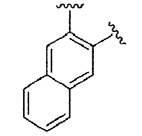 | 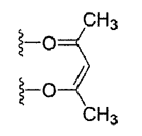 | 2 |
| 126 | 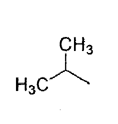 | H | H | H | **N**--- | 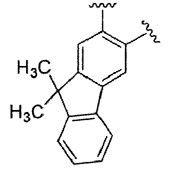 | 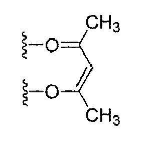 | 2 |
| 127 | 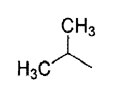 | H | H | H | **N**--- | 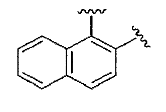 | 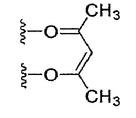 | 2 |
| 128 | 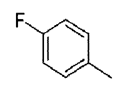 | H | H | H | **N**--- | 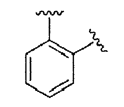 | 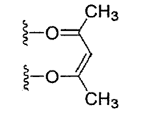 | 2 |
| 129 | 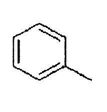 | H | H | H | **N**--- | 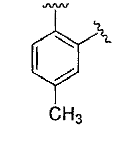 | 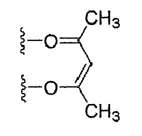 | 2 |
| 130 | 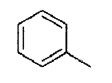 | H | H | H | **N**--- | 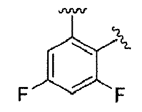 | 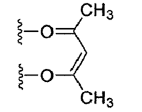 | 2 |
| 131 | 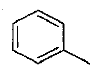 | H | H | H | **C**--- | 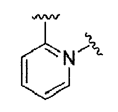 | 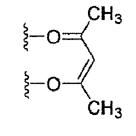 | 2 |
| 132 | 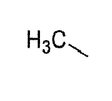 | H | H | H | **C**--- | 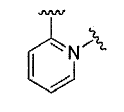 | 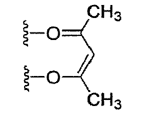 | 2 |
| 133 | 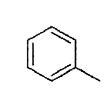 | H | H | H | **N**--- | 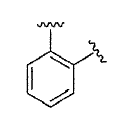 | 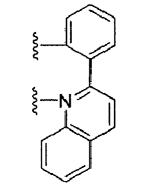 | 2 |
| 134 | 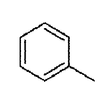 | H | H | H | **N**--- | 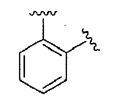 | 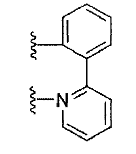 | 2 |
| 135 | 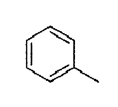 | H | H | H | **N**--- | 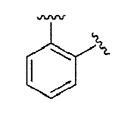 | 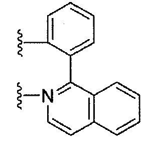 | 2 |
| 136 | 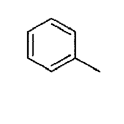 | H | H | H | **N**--- | 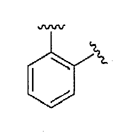 | 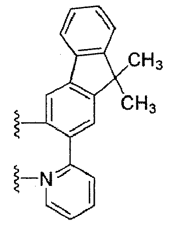 | 2 |
| 137 | 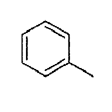 | H | H | H | **N**--- | 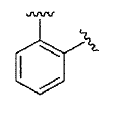 | 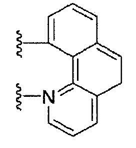 | 2 |
| 138 | 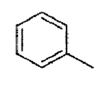 | H | H | H | **N**--- | 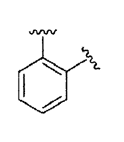 | 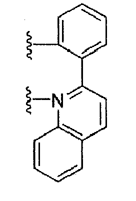 | 1 |
| 139 | 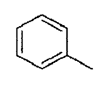 | H | H | H | **N**--- | 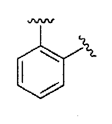 | 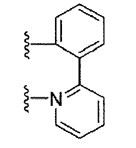 | 1 |
| 140 | 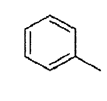 | H | H | H | **N**--- | 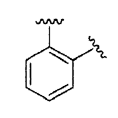 | 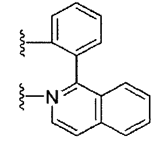 | 1 |
| 141 | 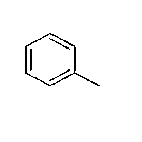 | H | H | H | **N**--- | 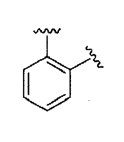 | 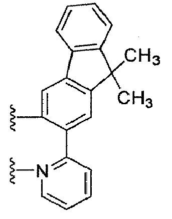 | 1 |
| 142 | 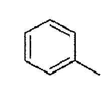 | H | H | H | **N**--- | 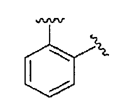 | 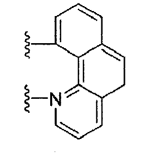 | 1 |
| 143 | 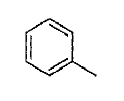 | H | H | H | **N**--- | 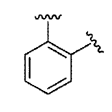 | 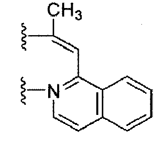 | 1 |
| 144 | 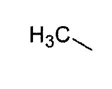 | H | H | H | **N**--- | 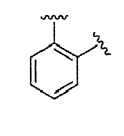 | 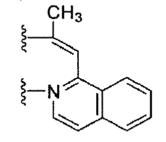 | 1 |
| 145 | 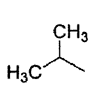 | H | H | H | **N**--- | 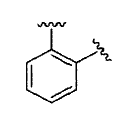 | 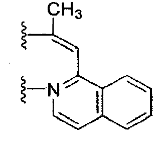 | 1 |
| 146 | 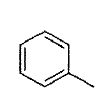 | H | H | H | **N**--- | 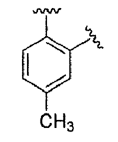 | 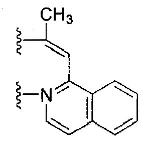 | 1 |
| 147 | 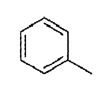 | H | H | H | **N**--- | 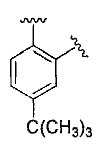 | 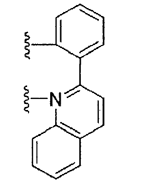 | 1 |
| 148 | 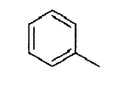 | H | H | H | **N**--- | 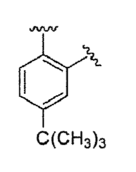 | 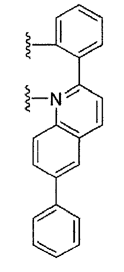 | 1 |
| 149 | 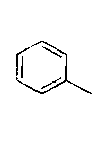 | H | H | H | **N**--- | 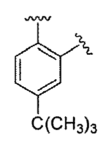 | 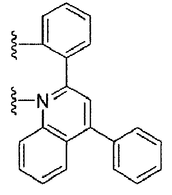 | 1 |
| 150 | 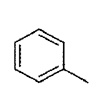 | H | H | H | **N**--- | 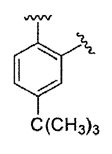 | 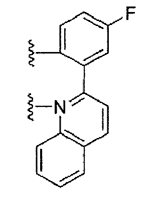 | 1 |
| 151 | 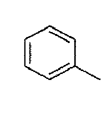 | H | H | H | **N**--- | 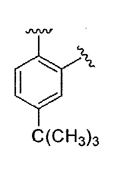 | 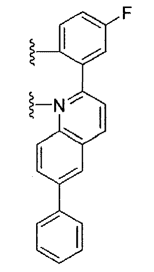 | 1 |
| 152 | 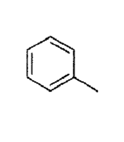 | H | H | H | **N**--- | 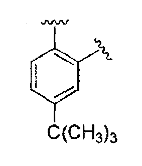 | 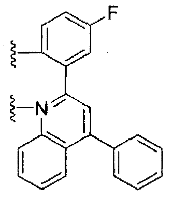 | 1 |
| 153 | 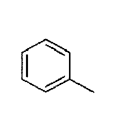 | H | H | H | **N**--- | 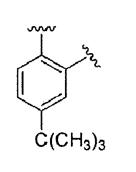 | 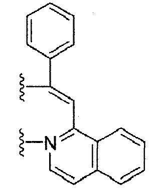 | 1 |
| 154 | 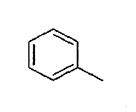 | H | H | H | **N**--- | 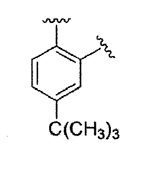 | 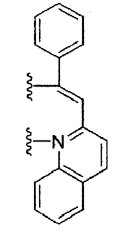 | 1 |
| 155 | 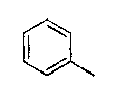 | H | H | H | **N**--- | 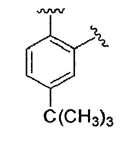 | 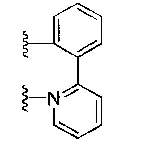 | 1 |
| 156 | 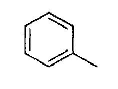 | H | H | H | **N**--- | 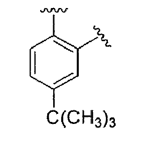 | 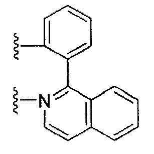 | 1 |
| 157 | 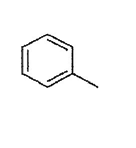 | H | H | H | **N**--- | 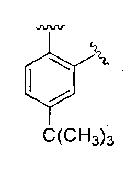 | 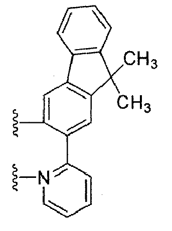 | 1 |
| 158 | 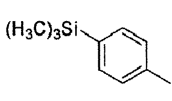 | H | H | H | **N**--- | 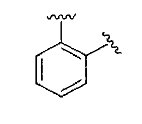 | 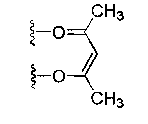 | 2 |
| 159 | 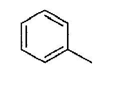 | -CH₃ | H | H | **N**--- | 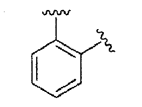 | 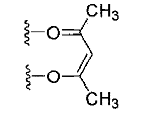 | 2 |
| 160 | 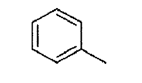 | H | -CH₃ | -CH₃ | **N**--- | 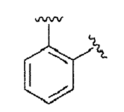 | 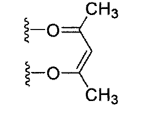 | 2 |
| 161 | 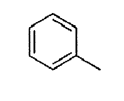 | H | H | H | **N**--- | 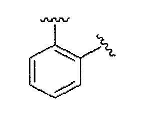 | 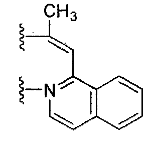 | 2 |
| 162 | 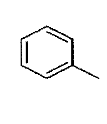 | H | H | H | **N**--- | 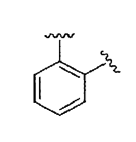 | 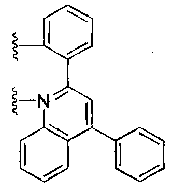 | 2 |
| 163 | 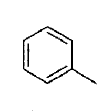 | H | H | H | **N**--- | 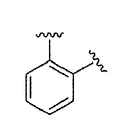 | 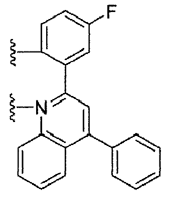 | 2 |
| 164 | 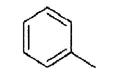 | H | H | H | **N**--- | 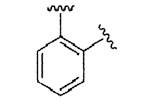 | - | 3 |
| 165 | 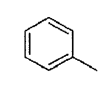 | H | H | H | **N**--- | 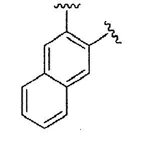 | 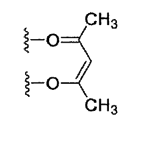 | 2 |
| 166 | 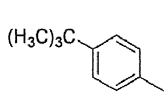 | H | H | H | **N**--- | 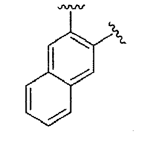 | 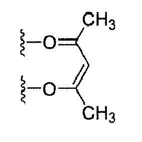 | 2 |
| 167 | 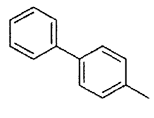 | H | H | H | **N**--- | 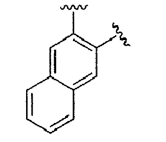 | 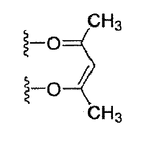 | 2 |
| 168 | 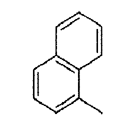 | H | H | H | **N**--- | 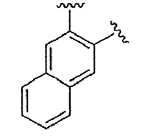 | 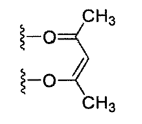 | 2 |
| 169 | 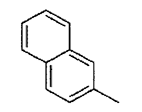 | H | H | H | **N**--- | 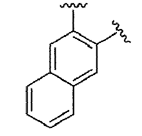 | 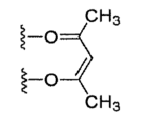 | 2 |
| 170 | 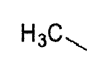 | H | H | H | **N**--- | 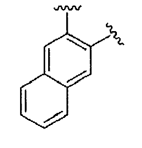 | 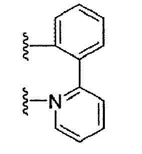 | 2 |
| 171 | 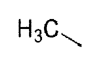 | H | H | H | **N**--- | 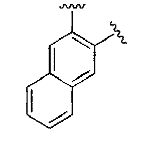 | - | 3 |
| 172 | 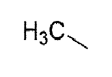 | H | H | H | **N**--- | 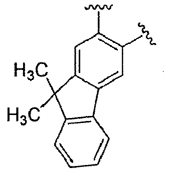 | 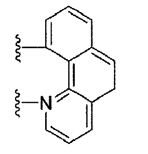 | 2 |
| 173 | 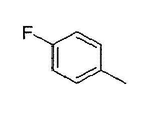 | H | H | H | **N**--- | 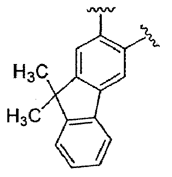 | 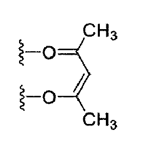 | 2 |
| 174 | 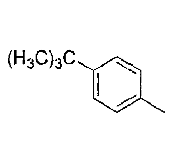 | H | H | H | **N**--- | 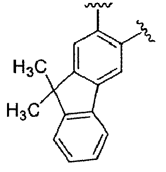 | 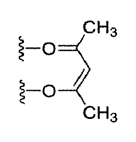 | 2 |
| 175 | 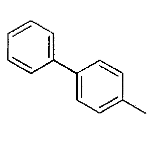 | H | H | H | **N**--- | 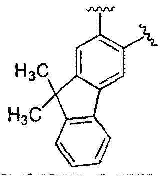 | 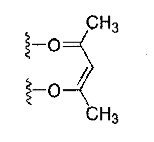 | 2 |
| 176 | 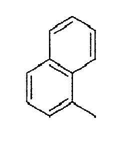 | H | H | H | **N**--- | 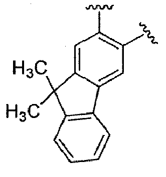 | 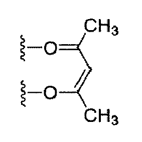 | 2 |
| 177 | 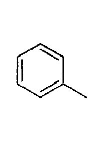 | H | H | H | **N**--- | 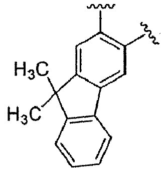 | 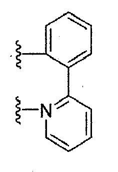 | 2 |
| 178 | 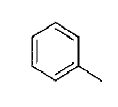 | H | H | H | **N**--- | 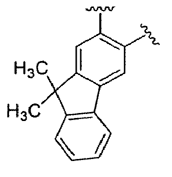 | - | 3 |
| 179 | 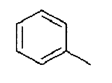 | H | H | H | **N**--- | 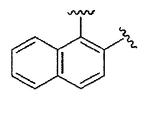 | 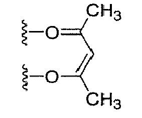 | 2 |
| 180 | 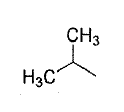 | -CH₃ | -CH₃ | -CH₃ | **N**--- | 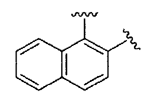 | 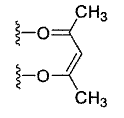 | 2 |
| 181 | 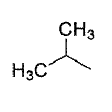 | H | H | H | **N**--- | 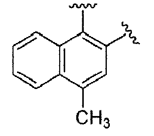 | 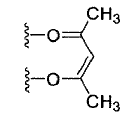 | 2 |
| 182 | 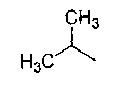 | H | H | H | **N**--- | 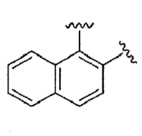 | 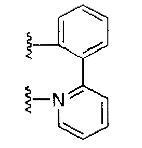 | 2 |
| 183 | 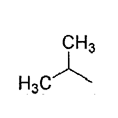 | H | H | H | **N**--- | 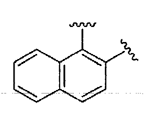 | 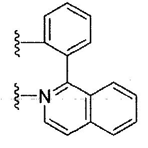 | 2 |
| 184 | 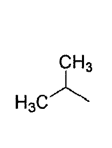 | H | H | H | **N**--- | 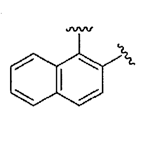 | 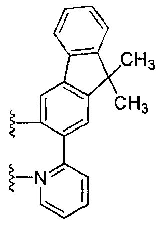 | 2 |
| 185 | 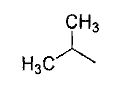 | H | H | H | **N**--- | 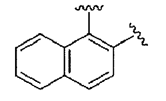 | - | 3 |
| 186 | 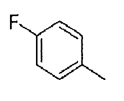 | H | H | H | **C**--- | 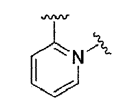 | 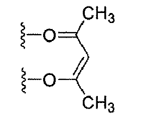 | 2 |
| 187 | 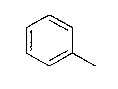 | H | H | H | **C**--- | 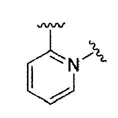 | 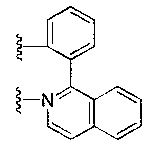 | 2 |
| 188 | 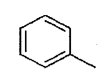 | H | H | H | **C**--- | 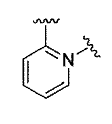 | 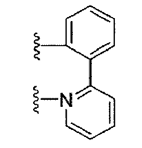 | 2 |
| 189 | 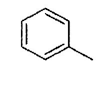 | H | H | H | **C**--- | 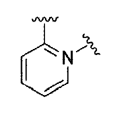 | 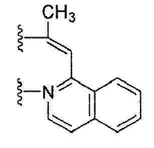 | 2 |
| 190 | 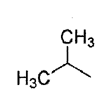 | H | H | H | **C**--- | 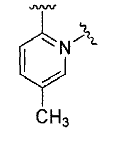 | 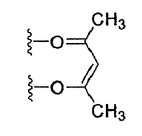 | 2 |
| 191 | 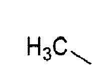 | H | H | H | **C**--- | 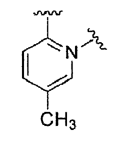 | 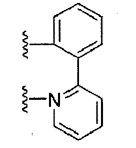 | 2 |
| 192 | 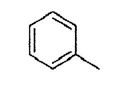 | H | H | H | **C**--- | 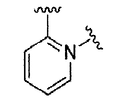 | - | 3 |
| 193 | 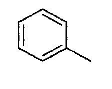 | H | H | H | **N**--- | 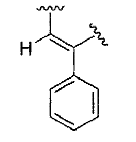 | 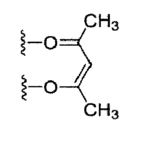 | 2 |
| 194 | 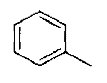 | H | H | H | **N**--- | 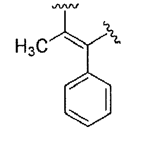 | 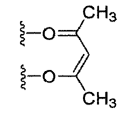 | 2 |
| 195 | 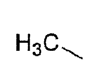 | H | H | H | **N**--- | 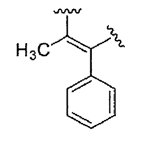 | 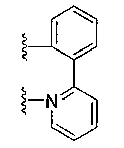 | 2 |
| 196 | 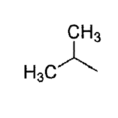 | H | H | H | **N**--- | 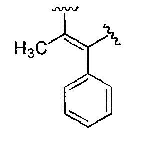 | 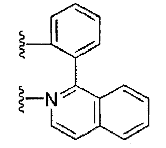 | 2 |
| 197 | 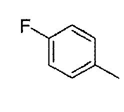 | H | H | H | **N**--- | 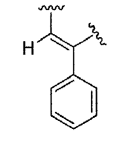 | 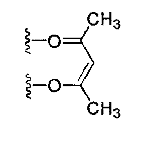 | 2 |
| 198 | 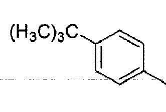 | H | H | H | **N**--- | 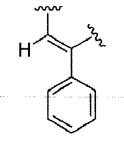 | 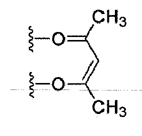 | 2 |
| 199 | 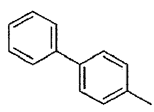 | H | H | H | **N**--- | 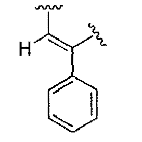 | 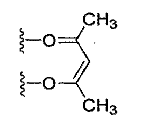 | 2 |
| 200 | 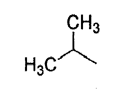 | H | H | H | **N**--- | 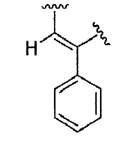 | - | 3 |

**Table 2**

| Comp. No. | ¹H NMR (CDCl₃, 300 MHz) | MS/FAB | |
|---|---|---|---|
| | | found | calculated |
| 101 | δ = 8.89 (d, *J* = 1.2 Hz, 2H), 8.30 (dd, *J* = 1.8 Hz, 8.4 Hz, 2H), 7.98 (d, *J* = 8.7 Hz, 2H), 7.83- 7.80 (m, 4H), 7.65-7.58 (m, 4H) 7.53-7.48 (m, 4H), 6.86 (td, *J* = 1.2 Hz, 7.5 Hz, 2H), 6.74 (td, *J* = 1.5 Hz, 7.5 Hz, 2H), 6.30 (dd, *J* = 1.2 Hz, 7.8 Hz, 2H), 5.29 (s, 1H), 1.55 (s, 6H). | 808.1910 | 808.1913 |
| 102 | δ =8.83 (d, *J*= 2.0 Hz, 2H), 8.27 (dd, *J* = 2.0 Hz, 8.5 Hz, 2H), 7.93 (d, *J* = 8.6 Hz, 2H), 7.82-7.79 (m, 4H), 7.63-7.57 (m, 2H), 7.55-7.47 (m, 6H), 6.68 (dd, *J* = 1.6 Hz, 7.9 Hz, 2H), 6.10 (s, 2H), 5.28 (s, 1H), 2.08 (s, 6H), 1.55 (s, 6H). | 836.2228 | 836.2226 |
| 103 | δ = 8.92 (d, *J* = 1.3 Hz, 2H), 8.29 (dd, *J* = 2.0 Hz, 8.5 Hz, 2H), 8.00 (d, *J* = 8.7 Hz, 2H), 7.81 (dd, *J* = 1.3 Hz, 8.3 Hz, 4H), 7.70 (d, *J* = 8.1 Hz, 2H), 7.63-7.58 (m, 2H), 7.51-7.46 (m, 4H), 7.35- 7.19 (m, 10H), 7.11 (dd, *J* = 1.8 Hz, 8.1 Hz, 2H), 6.54 (d, *J* = 1.6 Hz, 2H), 5.28 (s, 1H), 1.57 (s, 6H). | 960.2545 | 960.2539 |
| 104 | δ =8.89 (dd, *J* = 0.6 Hz, 1.4 Hz, 2H), 8.26 (dd, *J*= 2.0 Hz, 8.5 Hz, 2H), 7.92 (d, *J* = 8.1 Hz, 2H), 7.83 (dd, *J* = 1.4 Hz, 8.3 Hz, 4H), 7.61-7.46 (m, 8H), 6.90 (dd, *J* = 1.9 Hz, 8.3 Hz, 2H), 6.30 (d, *J* = 1.8 Hz, 2H), 5.12 (s, 1H), 1.47 (s, 6H), 1.07 (s, 18H). | 920.3160 | 920.3165 |
| 105 | δ =8.80 (d, *J*= 2.0 Hz, 2H), 8.27 (dd, *J* = 2.2 Hz, 8.5 Hz, 2H), 7.93 (d, *J* = 8.6 Hz, 2H), 7.82-7.79 (m, 4H), 7.63-7.58 (m, 2H), 7.55-7.47 (m, 6H), 6.68 (dd, *J* = 1.6 Hz, 7.9 Hz, 2H), 6.10 (s, 2H), 5.28 (s, 1H), 2.08 (s, 6H), 1.55 (s, 6H). | 836.2228 | 836.2226 |
| 106 | δ = 8.81 (d, *J* = 2.0 Hz, 2H), 8.30 (dd, *J* = 2.0 Hz, 8.5 Hz, 2H), 7.92 (d, *J* = 8.6 Hz, 2H), 7.80 (d, *J*= 7.0 Hz, 4H), 7.67-7.60 (m, 4H), 7.54-7.49 (m, 4H), 6.61 (td, *J* = 2.5 Hz, 8.7 Hz, 2H), 5.91 (dd, *J* = 2.5 Hz, 9.5 Hz, 2H), 5.28 (s, 1H), 1.57 (s, 6H). | 844.1711 | 844.1725 |
| 107 | δ = 8.92 (d, *J* = 1.3 Hz, 2H), 8.29 (dd, *J* = 2.0 Hz, 8.5 Hz, 2H), 8.00 (d, *J* = 8.2 Hz, 2H), 7.81 (dd, *J* = 1.3 Hz, 8.3 Hz, 4H), 7.70 (d, *J* = 8.1 Hz, 2H), 7.63-7.59 (m, 2H), 7.51-7.46 (m, 4H), 7.35- 7.25 (m, 10H), 7.16 (dd, *J* = 1.8 Hz, 8.1 Hz, 2H), 6.54 (d, *J* = 1.6 Hz, 2H), 5.28 (s, 1H), 1.55 (s, 6H). | 960.2545 | 960.2539 |
| 108 | δ =8.89 (dd, *J* = 0.6 Hz, 1.4 Hz, 2H), 8.26 (dd, *J*= 2.0 Hz, 8.5 Hz, 2H), 7.92 (d, *J* = 8.1 Hz, 2H), 7.83 (dd, *J* = 1.4 Hz, 8.3 Hz, 4H), 7.61-7.46 (m, 8H), 6.90 (dd, *J* = 1.9 Hz, 8.3 Hz, 2H), 6.30 (d, *J* = 1.8 Hz, 2H), 5.12 (s, 1H), 1.47 (s, 6H), 1.07 (s, 9H), 0.66(s, 9H). | 952.28 | 952.27 |
| 109 | δ = 8.81 (d, *J* = 1.9 Hz, 2H), 8.41-8.31 (m, 4H), 7.82-7.79 (m, 4H), 7.64 (t, *J* = 7.4 Hz, 2H), 7.53 (t, *J*= 7.6 Hz, 4H), 6.43-6.36 (m, 2H), 5.70 (dd, *J* = 2.3 Hz, 8.6 Hz, 2H), 5.31 (s, 1H), 1.59 (s, 6H). | 880.1533 | 880.1536 |
| 110 | δ = 8.80 (d, *J* = 2.0 Hz, 2H), 8.25 (dd, *J*= 2.0 Hz, 8.6 Hz, 2H), 7.84 (d, *J* = 8.7 Hz, 2H), 7.79 (d, *J* = 7.7 Hz, 4H), 7.61 (d, *J* = 8.7 Hz, 4H), 7.53-7.48 (m, 4H), 6.46 (dd, *J* = 2.5 Hz, 8.6 Hz, 2H), 5.79 (d, *J* = 2.5 Hz, 2H), 5.28 (s, 1H), 3.56 (s, 6H), 1.55 (s, 6H). | 868.2139 | 868.2125 |
| 111 | δ = 8.92 (d, *J* = 1.3 Hz, 2H), 8.29 (dd, *J* = 2.0 Hz, 8.5 Hz, 2H), 8.00 (d, *J* = 8.7 Hz, 2H), 7.81 (dd, *J* = 1.3 Hz, 8.3 Hz, 4H), 7.70 (d, *J* = 8.1 Hz, 2H), 7.63-7.58 (m, 2H), 7.51-7.46 (m, 6H), 7.35- 7.19 (m, 13H), 7.11 (dd, *J* = 1.8 Hz, 8.1 Hz, 2H), 6.54 (d, *J* = 1.6 Hz, 2H), 5.28 (s, 1H), 1.57 (s, 6H). | 1112.30 | 1112.32 |
| 112 | δ = 9.06 (d, *J* = 2.0 Hz, 2H), 8.26 (dd, *J* = 2.0 Hz, 8.6 Hz, 2H), 7.93 (d, *J* = 8.7 Hz, 2H), 7.62 (d, *J* = 7.7Hz, 2H), 6.88-6.83 (m, 2H), 6.76-6.70 (m, 2H), 6.28 (d, *J* = 7.7Hz, 2H), 5.29 (s, 1H), 2.60 (s, 6H), 1.84 (s, 6H). | 684.1585 | 684.1600 |
| 113 | δ = 8.61 (d, *J* = 2.0 Hz, 2H), 8.38 (dd, *J* = 2.0 Hz, 8.5 Hz, 2H), 8.04 (d, *J* = 7.8 Hz, 2H), 8.00 (d, 8.2 Hz, 2H), 7.95 (d, *J* = 8.2 Hz, 2H), 7.90 (d, *J* = 7.8 Hz, 2H), 7.61-7.58 (m, 4H), 7.57-7.47 (m, 6H), 6.82 (td, *J* = 1.2 Hz, 7.5 Hz, 2H), 6.71 (td, *J* = 1.4 Hz, 7.4 Hz, 2H), 6.24 (dd, *J* = 0.8 Hz, 7.6 Hz, 2H), 4.65 (s, 1H), 1.19 (s, 6H). | 908.2236 | 908.2226 |
| 114 | δ = 8.92 (d, *J* = 1.4 Hz, 2H), 8.32 (dd, *J* = 2.0 Hz, 8.5 Hz, 2H), 8.23 (s, 2H), 8.00 (d, *J* = 8.2 Hz, 2H), 7.96-7.90 (m, 8H), 7.66-7.59 (m, 6H), 6.87 (td, *J* = 1.2 Hz, 7.5 Hz, 2H), 6.76 (td, *J* = 1.4 Hz, 7.4 Hz, 2H), 6.32 (dd, *J* = 1.0 Hz, 7.6 Hz, 2H), 5.18 (s, 1H), 1.22 (s, 6H). | 908.2236 | 908.2226 |
| 115 | δ = 8.94 (d, *J* = 2.0 Hz, 2H), 8.31 (dd, *J* = 2.0 Hz, 8.5 Hz, 2H), 8.00 (d, *J* =8.3 Hz, 2H), 7.90 (d, *J* = 8.3 Hz, 4H), 7.72 (d, *J* = 8.3 Hz, 4H), 7.66- 7.60 (m, 6H), 7.51-7.38 (m, 6H), 6.87 (td, *J* = 1.0 Hz, 7.5 Hz, 2H), 6.76 (td, *J* = 1.3 Hz, 7.5 Hz, 2H), 6.33 (d, *J* = 7.5 Hz, 2H), 5.31 (s, 1H), 1.57 (s, 6H). | 960.2555 | 960.2539 |
| 116 | δ = 8.91 (d, *J* = 2.0 Hz, 2H), 8.31 (dd, *J* = 2.0 Hz, 8.5 Hz, 2H), 7.98 (d, *J* = 8.7 Hz, 2H), 7.77 (d, *J* = 8.4 Hz, 4H), 7.64 (dd, *J* = 1.2 Hz, 7.8 Hz, 2H), 7.51 (d, *J* = 8.4 Hz, 4H), 6.86 (td, *J* = 1.2 Hz, 7.5 Hz, 2H), 6.74 (td, *J* = 1.4 Hz, 7.4 Hz, 2H), 6.30 (dd, *J* = 0.8 Hz, 7.6 Hz, 2H), 5.28 (s, 1H), 1.56 (s, 6H), 1.35 (s, 18H). | 920.3166 | 920.3165 |
| 117 | δ = 9.09 (d, *J* = 1.8 Hz, 2H), 8.28 (dd, *J* = 1.8 Hz, 8.4 Hz, 2H), 7.94 (d, = 8.4 Hz, 2H), 7.63 (dd, = 1.2 Hz, 8.4 Hz, 2H), 6.87-6.83 (m, 2H), 6.76- 6.71 (m, 2H), 6.30 (d, = 0.9 Hz, 7.8 Hz, 2H), 5.29 (s, 1H), 3.42 (m, 2H), 1.83 (s, 6H), 1.27 (d, = 7.2 Hz, 12H). | 740.2222 | 740.2226 |
| 118 | δ = 9.22 (d, *J* = 1.5 Hz, 2H), 8.41 (dd, *J* = 2.0 Hz, 8.6 Hz, 2H), 8.24 (d, *J* = 8.4 Hz, 2H), 8.19 (s, 2H), 7.67 (d, *J* = 7.5 Hz, 2H), 7.26 (d, *J* = 9.4 Hz, 2H), 7.21-7.18 (m, 2H), 7.16-7.13 (m, 2H), 6.61 (s, 2H), 5.32 (s, 1H), 2.68 (s 6H), 1.88 (s, 6H). | 784.1920 | 784.1913 |
| 119 | δ = 9.14, (d, *J* = 2.0 Hz, 2H), 8.40 (dd, *J* = 2.0 Hz, 8.6 Hz, 2H), 8.14 (d, *J* = 8.8 Hz, 2H), 7.83 (s, 2H), 7.40 (d, *J* = 7.5 Hz, 2H), 7.36 (d, *J* = Hz, 2H), 7.27 (dd, *J* = 1.2 Hz, 7.4 Hz, 2H), 7.22-7.19 (m, 2H), 6.72 (s, 2H), 5.43 (s, 1H), 2.66 (s, 6H), 1.91 (s, 6H), 1.52 (s, 6H), 1.46 (s, 6H). | 916.2869 | 916.2852 |
| 120 | δ = 9.14, (d, *J* = 2.0 Hz, 2H), 8.40 (dd, *J* = 2.0 Hz, 8.6 Hz, 2H), 8.14 (d, *J* = 8.8 Hz, 2H), 7.83 (s, 2H), 7.81-7.45(m, 5H), 7.40 (d, *J* = 7.5 Hz, 2H), 7.36 (d, *J* = 7.5 Hz, 2H), 7.27 (dd, *J* = 1.2 Hz, 7.4 Hz, 2H), 7.22-7.19 (m, 2H), 6.72 (s, 2H), 5.43 (s, 1H), 2.66 (s, 6H), 1.91 (s, 6H), 1.52 (s, 6H), 1.46 (s, 6H). | 1040.32 | 1040.23 |
| 121 | δ = 8.28 (d, *J* = 2.1 Hz, 2H), 7.89 (dd, *J* = 2.1 Hz, 8.7 Hz, 2H), 7.22 (d, *J* = 8.1 Hz, 2H), 6.95- 6.91 (m, 6H), 6.90-6.87 (m, 6H), 5.17 (s, 1H), 3.08 (m, 2H), 1.87 (s, 6H), 1.12 (d, *J* = 6.6 Hz, 6H), 1.03 (d, *J* = 6.6 Hz, 6H). | 792.2558 | 792.2539 |
| 122 | δ = 9.06 (d, *J* = 2.0 Hz, 2H), 8.26 (dd, *J* = 2.0 Hz, 8.6 Hz, 2H), 7.93 (d, *J* = 8.7 Hz, 2H), 7.62 (d, *J* = 7.7Hz, 2H), 6.88-6.85 (m, 1H), 6.76-6.70 (m, 2H), 6.28 (d, *J* = 7.7Hz, 2H), 5.29 (s, 1H), 2.60 (s, 6H), 2.35(s, 3H), 1.84 (s, 6H). | 712.1913 | 711.8311 |
| 123 | δ = 9.09 (d, *J* = 2.0 Hz, 2H), 8.24 (dd, *J* = 2.0 Hz, 8.6 Hz, 2H), 7.87 (d, *J* = 8.5 Hz, 2H), 7.54 (d, *J* = 8.3 Hz, 2H), 6.89 (dd, *J* = 1.9 Hz, 8.3 Hz, 2H), 6.23 (d, *J* = 1.9 Hz, 2H), 5.27 (s, 1H), 2.60 (s, 6H), 1.85 (s, 6H), 1.03 (s, 18H). | 796.2852 | 796.2855 |
| 124 | δ = 9.10 (d, *J* = 2.0 Hz, 2H), 8.29 (dd, *J* = 2.0 Hz, 8.6 Hz, 2H), 7.97 (d, *J* = 8.7 Hz, 2H), 7.70 (d, *J* = 8.2Hz, 2H), 7.30-7.27 (m, 10H), 7.11 (dd, *J* = 1.8 Hz, 8.1 Hz, 2H), 6.50 (d, *J* = 1.7 Hz, 2H), 5.33 (s, 1H), 2.63 (s, 6H), 1.87 (s, 6H). | 836.2196 | 836.2226 |
| 125 | δ = 9.22 (d, *J* = 1.8 Hz, 2H), 8.40 (dd, *J* = 1.8 Hz, 8.7 Hz, 2H), 8.22 (d, *J* = 8.7 Hz, 2H), 8.16 (s, 2H), 7.65 (d, *J* = 7.8 Hz, 2H), 7.24-7.11 (m, 6H), 6.61 (s, 2H), 5.33 (s, 1H), 3.47 (m, 2H), 1.84 (s, 6H), 1.30 (d, *J* = 6.6 Hz, 12H). | 840.2556 | 840.2542 |
| 126 | δ = 9.15 (d, *J* = 2.1 Hz, 2H), 8.35 (dd, *J* = 2.1 Hz, 8.7 Hz, 2H), 8.06 (d, *J* = 8.7 Hz, 2H), 7.70 (s, 2H), 7.32-7.28 (m, 4H), 7.22-7.15 (m, 4H), 6.64 (s, 2H), 5.33 (s, 1H), 3.48 (m, 2H), 1.86 (s, 6H), 1.43 (d, *J* = 10 Hz, 12H), 1.29 (d, *J* = 6.6 Hz, 12H). | 972.3484 | 972.3478 |
| 127 | δ = 9.13 (d, *J* = 1.8 Hz, 2H), 8.62 (d, *J* = 8.7 Hz, 2H), 8.53 (d, *J* = 8.7 Hz, 2H), 8.36 (dd, *J* = 2.1 Hz, 8.7 Hz, 2H), 7.65-7.62 (m, 2H), 7.52-7.47 (m, 2H), 7.31-7.26 (m, 2H), 7.06 (d, *J* = 8.4 Hz, 2H), 6.35 (d, 8.4 Hz, 2H), 5.33 (s, 1H), 3.42 (m, 2H), 1.84 (s, 6H), 1.27 (d, J = 6.6 Hz, 6H), 1.26 (d, *J* = 6.6 Hz, 6H). | 840.2535 | 840.2542 |
| 128 | δ = 8.86 (d, *J* = 2.0 Hz, 2H), 8.26 (dd, *J* = 2.0 Hz, 8.5 Hz, 2H), 7.99 (d, *J* = 8.6 Hz, 2H), 7.86 (dd, *J* = 5.4 Hz, 8.7 Hz, 4H), 7.64 (dd, *J* = 1.1 Hz, 7.8 Hz, 2H), 7.19 (t, *J* = 8.5 Hz, 4H), 6.82 (td, *J* = 1.1 Hz, 7.5 Hz, 2H), 6.75 (td, *J* = 1.3 Hz, 7.4 Hz, 2H), 6.29 (dd, *J* = 1.1 Hz, 7.5 Hz, 2H), 5.29 (s, 1H), 1.59 (s, 6H). | 844.1733 | 844.1725 |
| 129 | δ = 8.85 (d, *J* = 1.9 Hz, 2H), 8.36 (dd, *J* = 2.0 Hz, 8.4 Hz, 2H), 8.08 (d, *J* = 8.6 Hz, 2H), 7.82- 7.79 (m, 4H), 7.74 (d, *J* = 8.1 Hz, 2H), 7.63-7.60 (m, 2H), 7.54-7.49 (m, 4H), 7.14 (d, *J* = 7.7 Hz, 2H), 6.50 (s, 2H), 5.23 (s, 1H), 1.53 (s, 6H). | 944.1659 | 944.1661 |
| 130 | δ = 8.79 (d, *J* = 2.0 Hz, 2H), 8.29 (dd, *J* = 2.0 Hz, 8.5 Hz, 2H), 7.89 (d, *J* = 8.6 Hz, 2H), 7.81- 7.78 (m, 4H), 7.63-7.60 (m, 2H), 7.54-7.49 (m, 4H), 7.30 (dd, *J* = 2.3 Hz, 9.2 Hz, 2H), 6.29 (td, *J* = 2.3 Hz, 9.2 Hz, 2H), 5.29 (s, 1H), 1.54 (s, 6H). | 880.1533 | 880.1536 |
| 131 | δ = 8.51-8.49 (m, 2H), 7.86 (d, *J* = 8.1 Hz, 2H), 7.68 (dd, *J* = 1.5 Hz, 7.5 Hz, 2H), 7.63 (d, *J* = 8.4 Hz, 2H), 7.57-7.54 (m, 4H), 7.49-7.44 (m, 2H), 7.34-7.28 (m, 6H), 7.16-7.11 (m, 2H), 6.59 (d, *J* = 1.5 Hz, 2H), 5.25 (s, 1H), 1.80 (s, 6H). | 808.1918 | 808.1913 |
| 132 | δ = 8.58 (dd, *J* = 0.8 Hz, 5.7 Hz, 2H), 7.96 (d, *J* = 7.8 Hz, 2H), 7.87-7.81 (m, 2H), 7.61 (d, *J* = 8.1 Hz, 2H), 7.41 (dd, *J* = 1.8 Hz, 8.1 Hz, 2H), 7.31- 7.28 (m, 2H), 7.65 (d, *J* = 1.8 Hz, 2H), 5.25 (s, 1H), 2.27 (s, 6H), 1.80 (s, 6H). | 684.1606 | 684.1600 |
| 133 | δ = 9.03(s, 2H), 8.1-8.0(m, 6H), 7.91(d, *J* = 7.5 Hz, 2H), 7.81-7.79(m, 5H), 7.7-7.6(m, 3H), 7.54- 7.4(m, 7H), 7.38-7.32(m, 9H) | 913.23 | 913.05 |
| 134 | δ = 9.05(s, 2H), 8.56(d, *J* = 2.8 Hz, 1H), 8.1- 8.0(m, 5H), 7.91(d. *J* = 8.3 Hz, 2H), 7.81(d. *J* = 7.6 Hz, 4H), 7.54-7.45(m, 8H), 7.3-6.98(m, 10H). | 863.21 | 862.99 |
| 135 | δ = 9.03(s, 2H), 8.5(d, *J* = 2.5 Hz, 2H), 8.1- 8.0(m, 5H), 7.95-7.9(m, 3H), 7.81-7.7(m, 5H), 7.6- 7.48(m, 8H), 7.3-7.1(m, 10H). | 913.23 | 913.05 |
| 136 | δ = 9.03(s, 2H), 8.56(d, *J* = 6.2 Hz, 1H), 8.3(d, *J* = 7.2 Hz, 1H), 8.1-8.0(m, 4H), 7.91-7.81(m, 8H), 7.6-7.4(m, 10H), 7.38-7.22(m, 8H), 1.67(s, 6H). | 979.27 | 979.15 |
| 137 | δ = 9.03(s, 2H), 8.8(d, *J* = 7.2 Hz, 1H), 8.1- 8.0(m, 5H), 7.91(d, *J* = 7.5 Hz, 2H), 7.81-7.7(m, 6H), 7.54-7.4(m, 7H), 7.35-7.3(m, 9H). | 887.21 | 887.01 |
| 138 | δ = 9.03(s, 1H), 8.1-8.0(m, 6H), 7.91(d, *J* = 7.5 Hz, 1H), 7.81-7.79(m, 4H), 7.7-7.6(m, 6H), 7.54- 7.4(m, 5H), 7.38-7.32(m, 9H). | 859.22 | 859.00 |
| 139 | δ = 9.05(s, 1H), 8.56(d, *J* = 2.8 Hz, 2H), 8.1- 8.0(m, 4H), 7.91(d. *J* = 8.3 Hz, 1H), 7.81(d. *J* = 7.6 Hz, 2H), 7.54-7.45(m, 7H), 7.3-6.98(m, 11H). | 759.89 | 759.19 |
| 140 | δ = 9.03(s, 1H), 8.5(d, *J* = 2.5 Hz, 2H), 8.1- 8.0(m, 4H), 7.95-7.9(m, 3H), 7.81-7.7(m, 4H), 7.6- 7.48(m, 7H), 7.3-7.1(m, 11H). | 859.22 | 859.00 |
| 141 | δ = 9.03(s, 1H), 8.56(d, *J* = 6.2 Hz, 2H), 8.3(d, *J* = 7.2 Hz, 2H), 8.1-8.0(m, 2H), 7.91-7.81(m, 7H), 7.6-7.4(m, 11H), 7.38-7.22(m, 7H), 1.67(s, 12H). | 991.31 | 991.21 |
| 142 | δ = 9.03(s, 1H), 8.8(d, *J* = 7.2 Hz, 2H), 8.1- 8.0(m, 4H), 7.91(d, *J* = 7.5 Hz, 1H), 7.81-7.7(m, 6H), 7.54-7.4(m, 5H), 7.35-7.3(m, 9H). | 807.19 | 806.93 |
| 143 | δ = 9.03(s, 1H), 8.4(d, *J* = 7.2 Hz, 2H), 8.1- 8.0(m, 2H), 7.91-7.81(m, 5H), 7.7-7.5(m, 7H), 7.45-7.32(m, 7H), 6.6(s, 2H), 1.71(s, 6H). | 787.22 | 786.94 |
| 144 | δ = 9.28(s, 1H), 8.4(d, *J* = 7.2 Hz, 2H), 8.15- 8.0(m, 2H), 7.90-7.84(m, 3H), 7.7-7.5(m, 6H), 7.4- 7.32(m, 5H), 6.6(s, 2H), 2.55(s, 3H), 1.71(s, 6H). | 725.20 | 724.87 |
| 145 | δ = 9.28(s, 1H), 8.4(d, *J* = 7.2 Hz, 2H), 8.15- 8.0(m, 2H), 7.90-7.84(m, 3H), 7.7-7.5(m, 6H), 7.4- 7.32(m, 5H), 6.6(s, 2H), 2.7(m, 1H), 1.71(s, 6H), 1.23(d. *J* = 2.2 Hz, 6H). | 753.23 | 752.92 |
| 146 | δ = 9.03(s, 1H), 8.4(d, *J* = 7.2 Hz, 2H), 8.01- 7.9(m, 5H), 7.81-7.6(m, 6H), 7.54-7.4(m, 7H), 7.3- 7.28(m, 2H), 6.6(s, 2H), 1.71(s, 6H), 1.34(s, 9H). | 843.28 | 843.05 |
| 147 | δ = 9.0(s, 1H), 8.1(d, *J* = 7.2 Hz, 2H), 8.01- 7.9(m, 5H), 7.84-7.8(m, 4H), 7.7(d, *J* = 7.2 Hz, 2H), 7.6-7.54(m, 5H), 7.45-7.4(m, 5H), 7.3-7.1(m, 6H), 1.41(s, 9H). | 915.28 | 915.00 |
| 148 | δ = 9.01(s, 1H), 8.1(d, *J* = 7.2 Hz, 2H), 8.01- 7.9(m, 7H), 7.8-7.75(m, 6H), 7.6-7.4(m, 11H), 7.3- 7.2(m, 12H), 1.35(s, 9H) | 1067.34 | 1067.00 |
| 149 | δ = 9.03(s, 1H), 8.1(d, *J* = 8.1 Hz, 2H), 8.01(d, *J* = 7.6 Hz, 1H), 8(d, *J* = 7.5 Hz, 2H), 7.91-7.81(m, 6H), 7.7(d, *J* = 8.1 Hz, 2H), 7.6-7.4(m, 13H), 7.3- 7.2(m, 12H), 1.34(s, 9H). | 1067.34 | 1067.00 |
| 150 | δ = 9.02(s, 1H), 8.1(d, *J* = 7.2 Hz, 2H), 8.01(d, *J* = 7.0 Hz, 1H), 7.91-7.8(m, 6H), 7.7-7.65(m, 4H), 7.6-7.4(m, 11H), 7.3(m, 2H), 7.0(m, 2H), 1.38(s, 9H). | 951.26 | 951.09 |
| 151 | δ = 9.03(s, 1H), 8.1(d, *J* = 8.1 Hz, 2H), 8.01(d, *J* = 7.6 Hz, 1H), 7.91-7.86(m, 4H), 7.81-7.77(m, 6H), 7.7(s, 1H), 7.6-7.4(m, 11H), 7.4-7.3(m, 10H), 7.0(d, J= 5.6 Hz, 2H), 1.34(s, 9H). | 1103.32 | 1103.28 |
| 152 | δ = 9.03(s, 1H), 8.1-7.9(m, 9H), 7.81(d, *J* = 7.5 Hz, 2H), 7.7(d, *J* = 7.1 Hz, 2H), 7.6-7.4(m, 13H), 7.3-7.22(m, 12H), 1.34(s, 9H). | 1103.32 | 1103.28 |
| 153 | δ = 9.03(s, 1H), 8.5(d, *J* = 7.7 Hz, 2H), 8.01- 7.81(m, 7H), 7.7(d, *J* = 7.1 Hz, 2H), 7.6-7.4(m, 9H), 7.3(d, *J* = 8.0 Hz, 4H), 7.26-7.23(m, 6H), 7.2(s, 2H), 7.14(m, 2H), 1.34(s, 9H). | 967.31 | 967.19 |
| 154 | δ = 9.03(s, 1H), 8.1-7.81(m, 9H), 7.7-7.6(m, 4H), 7.54-7.4(m, 9H), 7.3-7.14(m, 12H), 1.34(s, 9H) | 967.31 | 967.19 |
| 155 | δ = 9.03(s, 1H), 8.56(d, *J* = 2.8 Hz, 2H), 8.1- 8.0(m, 3H), 7.95-7.9(m, 2H), 7.81(d. *J* = 7.6 Hz, 2H), 7.54-7.45(m, 9H), 7.3-6.98(m, 8H), 1.34(s, 9H). | 815.25 | 814.99 |
| 156 | δ = 9.0(s, 1H), 8.5(d, *J* = 7.2 Hz, 2H), 8.01- 7.9(m, 7H), 7.81(d, *J* = 7.5 Hz, 2H), 7.7(d, *J* = 7.2 Hz, 2H), 7.6-7.5(m, 5H), 7.45-7.4(m, 4H), 7.3- 7.1(m, 8H), 1.34(s, 9H). | 915.28 | 915.11 |
| 157 | δ = 9.03(s, 1H), 8.56(d, *J* = 6.2 Hz, 2H), 8.3(s, 2H), 8.01(d, *J* = 7.3 Hz, 1H), 7.9-7.81(m, 8H), 7.6-7.46(m, 9H), 7.4-7.3(m, 6H), 6.9-6.7(m, 2H), 1.67(s, 12H), 1.34(s, 9H). | 1047.37 | 1047.31 |

### [Example 1] Manufacture of an OLED

An OLED device was manufactured by using a red phosphorescent compound according to the invention.

First, a transparent electrode ITO thin film (15 Ω/□) (2) obtained from a glass for OLED (produced by Samsung Corning) was subjected to ultrasonic washing with trichloroethylene, acetone, ethanol and distilled water, sequentially, and stored in isopronanol before use.

Then, an ITO substrate was equipped in a substrate folder of a vacuum vapor-deposit device, and 4,4',4"-tris(N,N-(2-naphthyl)-phenylamino)triphenylamine (2-TNATA) was placed in a cell of the vacuum vapor-deposit device, which was then ventilated up to 10⁻⁶ torr of vacuum in the chamber. Electric current was applied to the cell to evaporate 2-TNATA, thereby providing vapor-deposit of a hole injection layer (3) having 60 nm of thickness on the ITO substrate.

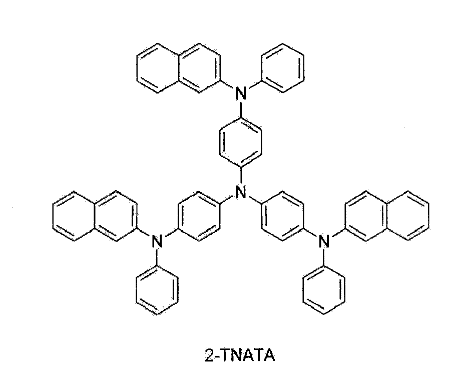

Then, to another cell of the vacuum vapor-deposit device, charged was N,N'-bis(α-naphthyl)-N,N'-diphenyl-4,4'-diamine (NPB), and electric current was applied to the cell to evaporate NPB, thereby providing vapor-deposit of a hole transportation layer (4) of 20 nm of thickness on the hole injection layer.

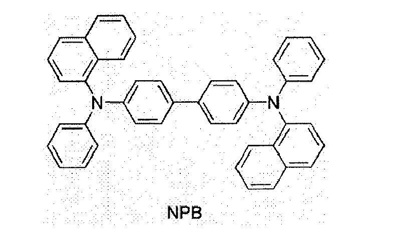

To another cell of the vacuum vapor-deposition device, host material according to the present invention (H-10) was charged, and red phosphorescent compound according to the invention (Compound 101) was charged to a still another cell. The two materials were evaporated at different rates to vapor-deposit an electroluminescent layer (5) of 30 nm of thickness on the hole transport layer. The suitable doping concentration is from 4 to 10 mol% on the basis of the host.

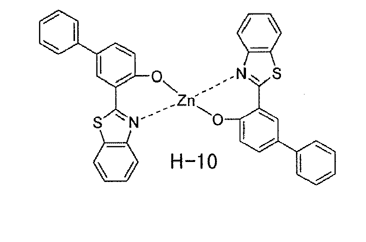

Then, tris(8-hydroxyquinoline)aluminum (III) (Alq) was vapor-deposited as an electron transportation layer (6) in a thickness of 20 nm, and then lithium quinolate (Liq) was vapor-deposited as an electron injection layer (7) in a thickness of 1 to 2 nm. Thereafter, an Al cathode (8) was vapor-deposited in a thickness of 150 nm by using another vacuum vapor-deposit device to manufacture an OLED.

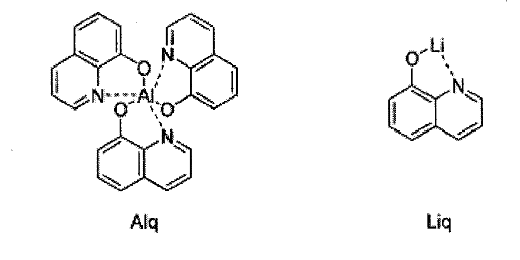

### Evaluation of optical properties of electroluminescent materials

The complexes having high synthetic yield were purified by vacuum sublimation at 10⁻⁶ torr and used as a dopant for an electroluminescent layer of an OLED, but in case of the material having low synthetic yield, photoluminescence peaks were simply confirmed. The photoluminescence peaks were measured by preparing a solution in methylene chloride with a concentration or 10⁻⁴ M or less. In every measurement of photoluminescence of each material, the wavelength of excitation was 250 nm.

In order to confirm the performance of the OLED's prepared according to Example 1, the luminous efficiency of the OLED's was measured at 10 mA/cm². Various properties are shown in Tables 3 and 4.

**Table 3**

| Material | n | No. of L | Structure of L | Host | Color coordinate (x,y) | EL(nm) | Max. luminous efficiency(cd/A) |
|---|---|---|---|---|---|---|---|
| 101 | 2 | 1 | Acac | H-10 | (0.65,0.35) | 616 | 8.9 |
| 102 | 2 | 1 | Acac | H-63 | (0.64,0.36) | 612 | 10.1 |
| 103 | 2 | 1 | Acac | H-2 | (0.63,0.36) | 614 | 9.1 |
| 104 | 2 | 1 | Acac | H-3 | (0.65,0.35) | 618 | 8.8 |
| 105 | 2 | 1 | Acac | H-76 | (0.66,0.33) | 630 | 4.9 |
| 106 | 2 | 1 | Acac | H-60 | (0.60,0.40) | 598 | 14.7 |
| 107 | 2 | 1 | Acac | H-4 | (0.66,0.34) | 626 | 5.0 |
| 108 | 2 | 1 | Acac | H-5 | (0.66,0.34) | 620 | 8.6 |
| 109 | 2 | 1 | Acac | H-6 | (0.61,0.40) | 604 | 13.3 |
| 110 | 2 | 1 | Acac | H-10 | (0.65,0.35) | 618 | 8.4 |
| 111 | 2 | 1 | Acac | H-62 | (0.63,0.36) | 612 | 6.8 |
| 112 | 2 | 1 | Acac | H-71 | (0.63,0.36) | 614 | 4.6 |
| 113 | 2 | 1 | Acac | H-75 | (0.66,0.33) | 622 | 6.1 |
| 114 | 2 | 1 | Acac | H-73 | (0.64,0.36) | 616 | 7.8 |
| 115 | 2 | 1 | Acac | H-11 | (0.65,0.35) | 620 | 7.0 |
| 116 | 2 | 1 | Acac | H-76 | (0.63,0.37) | 610 | 12.0 |
| 117 | 2 | 1 | Acac | H-10 | (0.63,0.36) | 614 | 7.8 |
| 118 | 2 | 1 | Acac | H-62 | (0.66,0.34) | 626 | 3.5 |
| 119 | 2 | 1 | Acac | H-2 | (0.69,0.31) | 640 | 2.0 |
| 120 | 2 | 1 | Acac | H-75 | (0.69,0.30) | 642 | 1.7 |
| 121 | 2 | 1 | Acac | H-6 | (0.64,0.35) | 622 | 4.4 |
| 122 | 2 | 1 | Acac | H-11 | (0.67,0.32) | 626 | 2.6 |
| 123 | 2 | 1 | Acac | H-62 | (0.68,0.31) | 634 | 2.1 |
| 124 | 2 | 1 | Acac | H-5 | (0.66,0.32) | 628 | 3.7 |
| 125 | 2 | 1 | Acac | H-6 | (0.63,0.36) | 618 | 6.4 |
| 126 | 2 | 1 | Acac | H-62 | (0.64,0.35) | 620 | 3.6 |
| 127 | 2 | 1 | Acac | H-10 | (0.61,0.28) | 612 | 5.9 |
| 128 | 2 | 1 | Acac | H-2 | (0.67,0.33) | 624 | 4.3 |
| 129 | 2 | 1 | Acac | H-10 | (0.63,0.36) | 614 | 5.5 |
| 130 | 2 | 1 | Acac | H-5 | (0.67,0.31) | 622 | 3.7 |
| 131 | 2 | 1 | Acac | H-75 | (0.66,0.34) | 620 | 6.9 |
| 132 | 2 | 1 | Acac | H-2 | (0.64,0.36) | 616 | 8.4 |

Table 3 shows device properties of the electroluminescent materials developed according to the present invention, wherein n=2 and L =1, and particularly the L is comprised of only subsidiary ligands of acac type, in the general structure of the material developed by the present invention.

The synthesized material (101), having phenyl for R₁ and hydrogen for R₂, R₃, R₄, R₇, R₈, R₉ and R₁₀ shows excellent properties: 616 nm of wavelength, color coordinate (0.65, 0.35), and 8.9 cd/A of luminous efficiency.

The electroluminescent materials (102, 104, 105, 107 and 108), having alkyl group or aromatic ring introduced at R₇, R₈ or R₉, showed wavelength change of 2 - 14 nm, as compared to material (101). The electroluminescent material (102), though having the shift toward shorter wavelength by about 4 nm, showed narrow width of the EL peak without change in color coordinate, and increased luminous efficiency. The electroluminescent materials (113∼116) wherein an aromatic ring has been introduced at R₁, showed somewhat different shift of wavelength depending on the binding position. The electroluminescent material (116), with shift toward shorter wavelength by 6 nm as compared to that of material (101), exhibited the color coordinate (0.63, 0.37).

**Table 4**

| Material | n | No. of L | Structure of L | Host | Color coordinate (x,y) | EL(nm) | Max. luminous efficency(cd/A) |
|---|---|---|---|---|---|---|---|
| 133 | 2 | 1 | Pq | H-62 | (0.65,0.35) | 616 | 6.8 |
| 134 | 2 | 1 | Ppy | H-5 | (0.65,0.35) | 620 | 6.1 |
| 135 | 2 | 1 | Piq | H-6 | (0.65,0.34) | 620 | 5.4 |
| 136 | 2 | 1 | Pyfl | H-73 | (0.65,0.35) | 620 | 5.6 |
| 137 | 2 | 1 | Bq | H-11 | (0.65,0.34) | 618 | 6.1 |
| 138 | 1 | 2 | Pq | H-6 | (0.64,0.36) | 612 | 9.7 |
| 139 | 1 | 2 | Ppy | H-76 | (0.66,0.33) | 628 | 4.8 |
| 140 | 1 | 2 | Piq | H-60 | (0.67,0.33) | 624 | 8.6 |
| 141 | 1 | 2 | Pyfl | H-4 | (0.64,0.36) | 616 | 7.0 |
| 142 | 1 | 2 | Bq | H-62 | (0.65,0.35) | 614 | 7.7 |
| 143 | 1 | 2 | Priq | H-71 | (0.64,0.36) | 608 | 6.9 |
| 144 | 1 | 2 | Priq | H-10 | (0.66,0.34) | 610 | 6.3 |
| 145 | 1 | 2 | Priq | H-63 | (0.66,0.34) | 610 | 6.5 |
| 146 | 1 | 2 | Priq | H-4 | (0.65,0.35) | 608 | 6.8 |
| 147 | 1 | 2 | Pq | H-10 | (0.64,0.36) | 616 | 7.9 |
| 148 | 1 | 2 | 2,6-Dpq | H-11 | (0.61,0.37) | 610 | 5.2 |
| 149 | 1 | 2 | Dpq | H-76 | (0.65,0.35) | 622 | 12.1 |
| 150 | 1 | 2 | PqF | H-5 | (0.64,0.36) | 608 | 16.1 |
| 151 | 1 | 2 | 2,6-DpqF | H-75 | (0.64,0.36) | 614 | 6.4 |
| 152 | 1 | 2 | 2,4-DpqF | H-6 | (0.65,0.35) | 618 | - |
| 153 | 1 | 2 | Peiq | H-10 | (0.68,0.32) | 648 | 2.5 |
| 154 | 1 | 2 | Peq | H-11 | (0.68,0.31) | 626 | 3.8 |
| 155 | 1 | 2 | Ppy | H-62 | (0.65,0.35) | 612 | 6.8 |
| 156 | 1 | 2 | Piq | H-76 | (0.67,0.33) | 620 | 8.7 |
| 157 | 1 | 2 | Pyfl | H-11 | (0.66,0.34) | 610 | 6.5 |

Table 4 shows device properties of phosphorescent materials consisting of primary ligands and subsidiary ligands having alkyl or aromatic ring substituted at R₁ or R₉ of the material developed according to the present invention. It is recognized that the electroluminescent materials have various range of EL wavelength depending upon the type of primary or subsidiary ligand(s).

When the materials developed according to the invention are used as a subsidiary ligand of various luminous body (n=1), color coordinate and efficiency, and in particular, chemical stability of the primary luminous body can be enhanced. Material (140) using piq luminous body, and the material developed according to the invention as a subsidiary ligand, provides the device with good properties: 624 nm of electroluminescent wavelength, color coordinate (0.67, 0.33), and 8.6 cd/A of luminous efficiency. Particularly, the color coordinate corresponds to deep red range satisfying that of NTSC. Ir(piq)₃ has more or less unstable bonding with slightly distorted binding of ligands to Ir core metal. Structural stability was enhanced by using the material developed according to the invention as a subsidiary ligand instead of three Piq ligands.

Fig. 1 is a cross-sectional view of an OLED.

### Industrial Applicability

The red electroluminescent compounds according to the present invention, being a compound of more beneficial skeletal in terms of better properties than conventional red phosphorescent materials, show more excellent EL properties. Thus, the results of advancement in developing OLED's of medium to large size are anticipated if the red electroluminescent compounds according to the present invention are applied to OLED panels.

## Claims

1. An organic electroluminescent device which is comprised of a first electrode; a second electrode; and at least one organic layer(s) interposed between the first electrode and the second electrode; wherein the organic layer comprises one or more organic phosphorescent compound(s) represented by Chemical Formula (1), and one or more host(s) selected from 1,3,5-tricarbazolylbenzene, 4,4'-biscarbazolylbiphenyl (CBP), polyvinylcarbazole, m-biscarbazolylphenyl, 4,4'-biscarbazolyl-2,2'-dimethylbiphenyl, 4,4'4"-tri(N-carbazolyl)triphenylamine, 1,3,5-tri(2-carbazolylphenyl)benzene, 1,3,5-tris(2-carbazolyl-5-methoxyphenyl)benzene, bis(4-carbazolylphenyl)silane, and the compounds represented by one of Chemical Formulas (8) to (11). 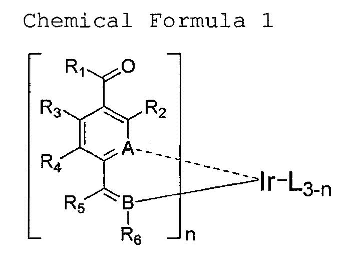 wherein, L is an organic ligand;
B is C if A is N, and B is N if A is C;
R₁ represents a linear or branched and a saturated or unsaturated (C₁-C₆₀)alkyl or (C₆-C₆₀)aryl;
R₂ through R₄ independently represent hydrogen, a linear or branched and a saturated or unsaturated (C₁-C₆₀)alkyl, (C₁-C₃₀)alkoxy, (C₃-C₆₀)cycloalkyl, (C₆-C₆₀)aryl, halogen, tri (C₁-C₃₀)alkylsilyl, di (C₁-C₃₀)alkyl (C₆-C₃₀)arylsilyl or tri (C₆-C₃₀)arylsilyl;
R₅ and R₆ independently represent hydrogen, a linear or branched (C₁-C₆₀)alkyl, (C₆-C₆₀)aryl or halogen, or R₅ and R₆ may be linked via (C₃-C₁₂)alkylene or (C₃-C₁₂)alkenylene with or without a fused ring to form an alicyclic ring, or a monocyclic or polycyclic aromatic ring; the alkyl or aryl of R₅ and R₆, or the alicyclic ring, or the monocyclic or polycyclic aromatic ring formed therefrom by linkage via (C₃-C₁₂)alkylene or (C₃-C₁₂)alkenylene with or without a fused ring may be further substituted by one or more substituent(s) selected from a linear or branched (C₁-C₆₀)alkyl with or without halogen substituent(s), (C₁-C₃₀)alkoxy, halogen, tri(C₁-C₃₀)alkylsilyl, di(C₁-C₃₀)alkyl (C₆-C₃₀)arylsilyl, tri(C₆-C₃₀)arylsilyl and (C₆-C₆₀)aryl;
the alkyl, alkoxy, cycloalkyl and aryl of R₁ through R₄ may be further substituted by one or more substituent(s) selected from a linear or branched (C₁-C₆₀)alkyl with or without halogen substituent(s), (C₁-C₃₀)alkoxy, halogen, tri(C₁-C₃₀)alkylsilyl, di(C₁-C₃₀)alkyl (C₆-C₃₀)arylsilyl, tri(C₆-C₃₀)arylsilyl and (C₆-C₆₀)aryl; and
n is an integer from 1 to 3. 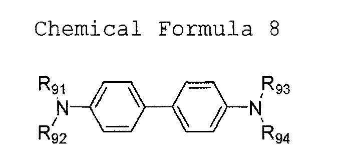 wherein, R₉₁ through R₉₄ independently represent linear or branched and saturated or unsaturated (C1-C60)alkyl or (C6-C60)aryl, or each of them may be linked to an adjacent substituent via (C3-C12)alkylene or (C3-C12) alkenylene with or without a fused ring to form an alicyclic ring, or a monocyclic or polycyclic aromatic ring; and the alkyl or aryl of R₉₁ through R₉₄, or the alicyclic ring, or the monocyclic or polycyclic aromatic ring formed therefrom by linkage via (C3-C12)alkylene or (C3-C12)alkenylene with or without a fused ring may be further substituted by one or more substituent(s) selected from linear or branched (C1-C60)alkyl with or without halogen substituent(s), (C1-C30)alkoxy, halogen, tri(C1-C30)alkylsilyl, tri(C6-C30)arylsilyl and (C6-C60)aryl; 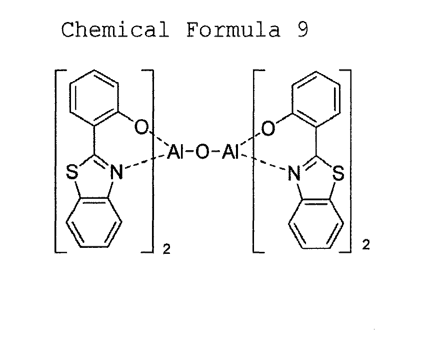 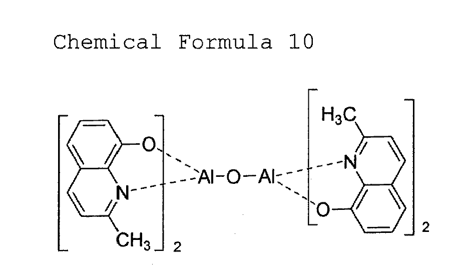 Chemical Formula 11
L¹L²M¹(Q)_{y}
wherein, the ligands, L¹ and L² are independently selected from the following structures; 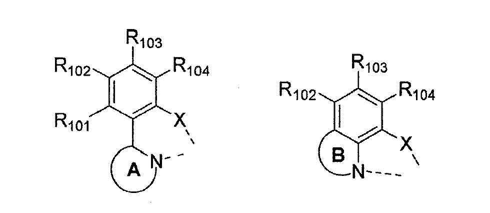 wherein, M¹ is a bivalent or trivalent metal;
y is 0 when M¹ is a bivalent metal, while y is 1 when M¹ is a trivalent metal;
Q represents (C6-C60)aryloxy or tri(C6-C60)arylsilyl, and the aryloxy and triarylsilyl of Q may be further substituted by linear or branched (C1-C60)alkyl or (C6-C60)aryl;
X represents O, S or Se;
ring A represents oxazole, thiazole, imidazole, oxadiazole, thiadiazole, benzoxazole, benzothiazole, benzimidazole, pyridine or quinoline;
ring B represents pyridine or quinoline, and ring B may be further substituted by linear or branched (C1-C60)alkyl, or phenyl or naphthyl with or without linear or branched (C1-C60)alkyl substituent(s);
R₁₀₁ through R₁₀₄ independently represent hydrogen, linear or branched (C1-C60)alkyl, halogen, tri(C1-C30)alkylsilyl, tri(C6-C30)arylsilyl or (C6-C60)aryl, or each of them may be linked to an adjacent substituent via (C3-C12)alkylene or (C3-C12)alkenylene to form a fused ring, and the pyridine or quinoline may form a chemical bond with R₁₀₁ to form a fused ring;
the aryl group of ring A and R₁₀₁ through R₁₀₄ may be further substituted by linear or branched (C1-C60)alkyl, halogen, linear or branched (C1-C60)alkyl with halogen substituent(s), phenyl, naphthyl, tri(C1-C30)alkylsilyl, tri(C6-C30)arylsilyl or amino group.

2. The organic electroluminescent device comprising an organic phosphorescent compound according to claim 1, wherein the alicyclic ring, or the monocyclic or polycyclic aromatic ring formed from R₅ and R₆ by linkage via (C₃-C₁₂)alkylene or (C₃-C₁₂)alkenylene with or without a fused ring is benzene, naphthalene, anthracene, fluorene, indene, phenanthrene or pyridine.

3. The organic electroluminescent device comprising an organic phosphorescent compound according to claim 2, which is selected from the compounds represented by one of Chemical Formulas (2) to (7): 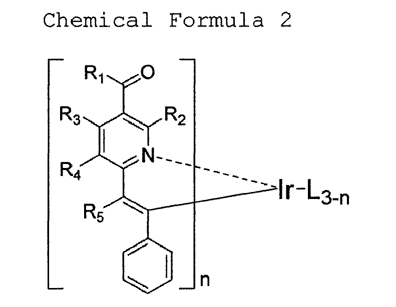 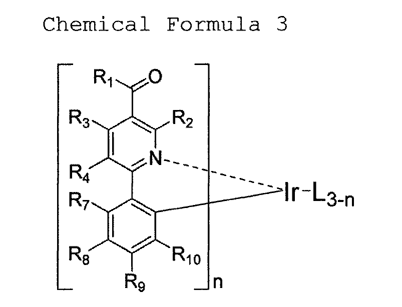 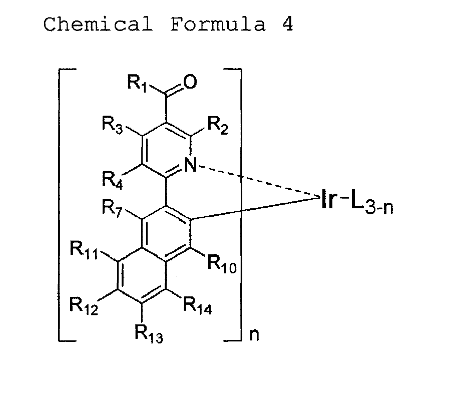 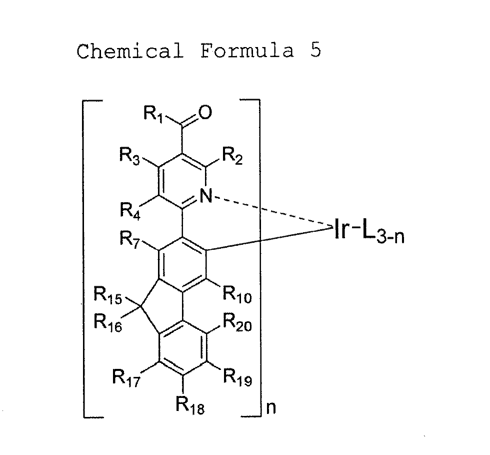 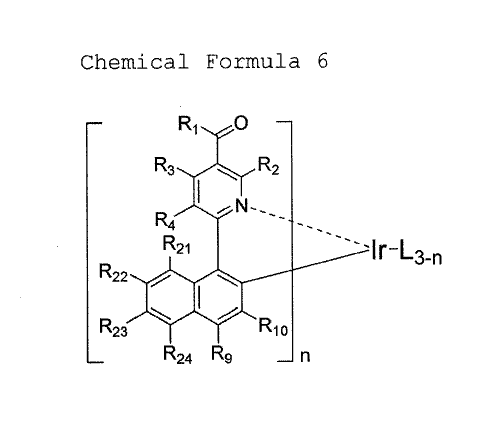 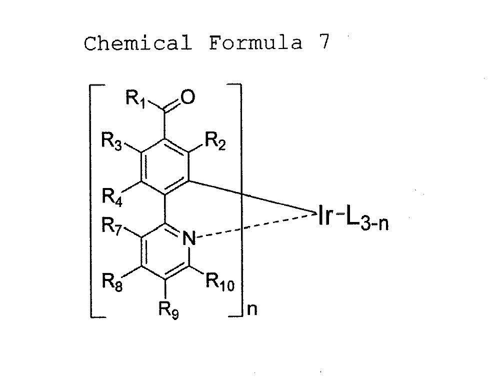 [wherein, L, R₁, R₂, R₃, R₄, R₅ and n are defined as in claim 1;
R₇ through R₁₄ and R₁₇ through R₂₄ independently represent hydrogen, a linear or branched (C₁-C₆₀)alkyl with or without halogen substituent(s), (C₁-C₃₀)alkoxy, halogen, tri(C₁-C₃₀)alkylsilyl, di (C₁-C₃₀)alkyl (C₆-C₃₀) arylsilyl, tri(C₆-C₃₀)arylsilyl or (C₆-C₆₀)aryl; and
R₁₅ and R₁₆ independently represent hydrogen or a linear or branched (C₁-C₆₀)alkyl.]

4. The organic electroluminescent device comprising an organic phosphorescent compound according to claim 3, which is selected from the compounds represented by one of the following chemical formulas: 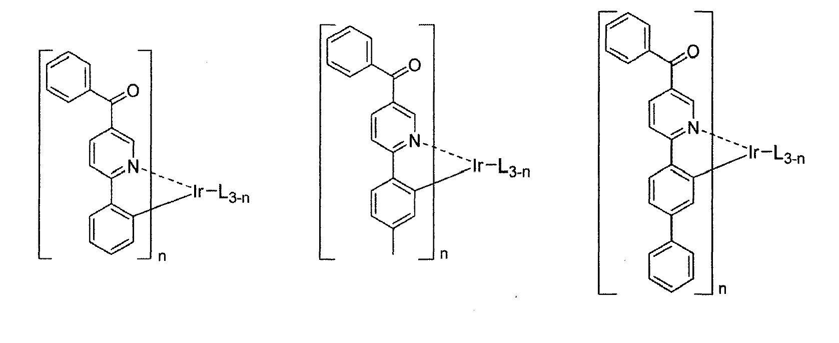 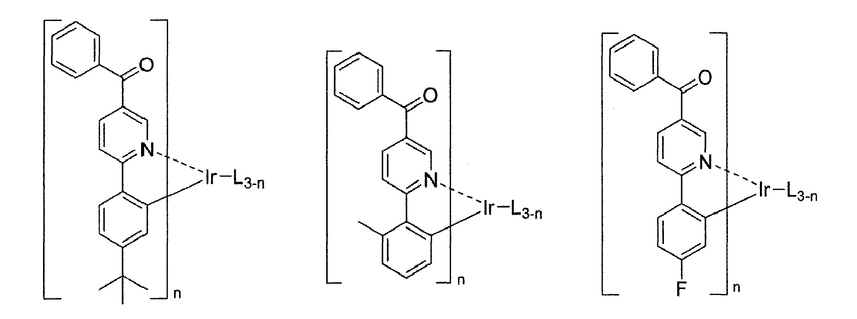 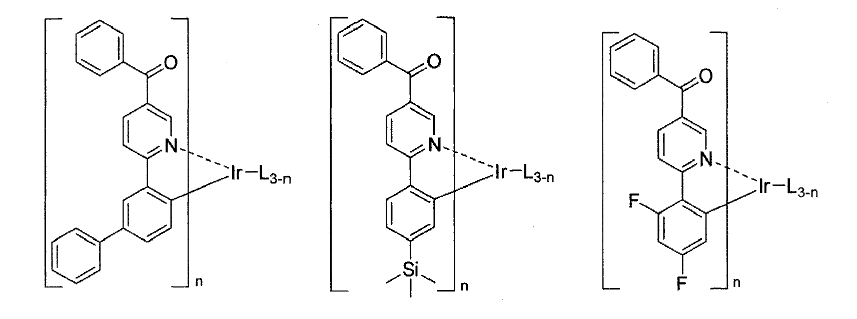 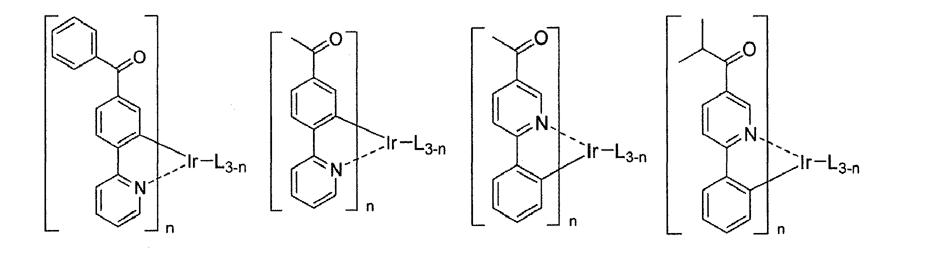 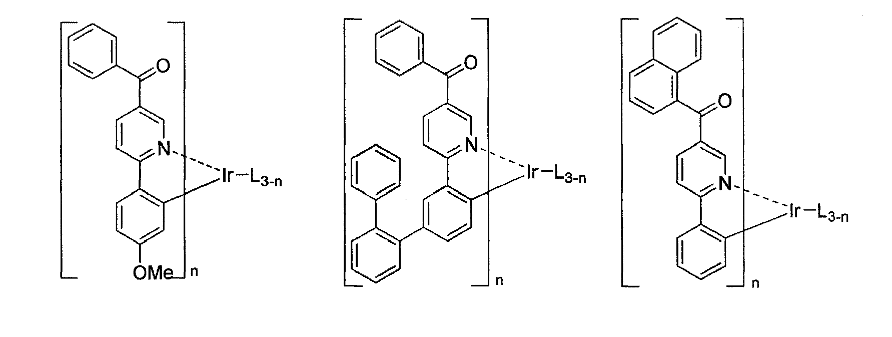 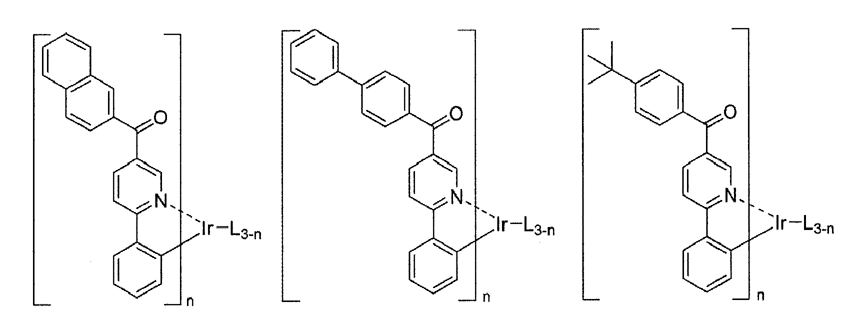 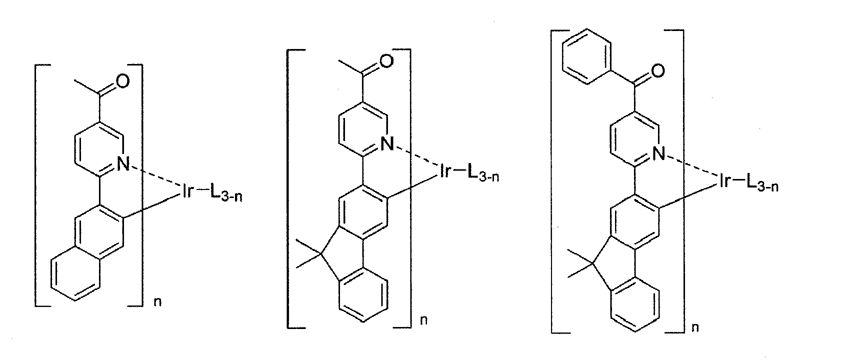 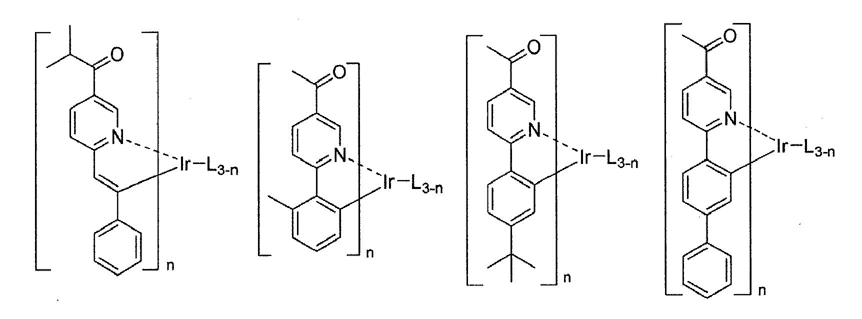 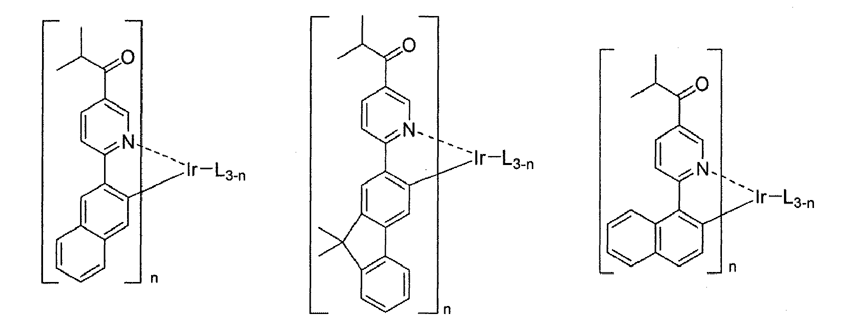 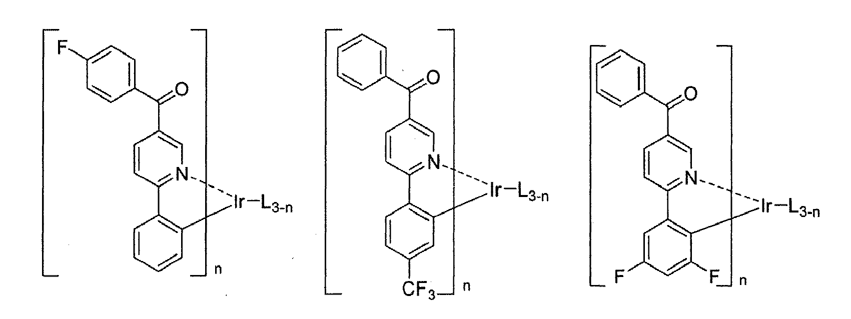 [wherein, L is an organic ligand, and n is an integer from 1 to 3.]

5. The organic electroluminescent device comprising an organic phosphorescent compound according to claim 4, wherein the ligand (L) has a structure represented by one of the following chemical formulas: 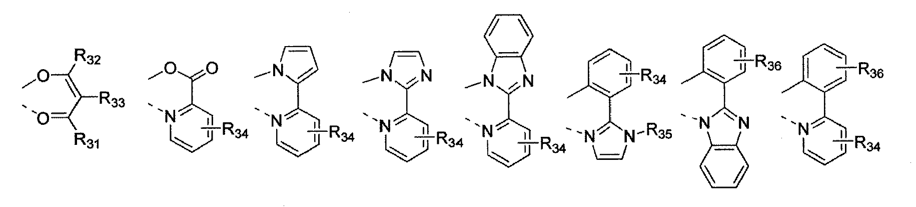 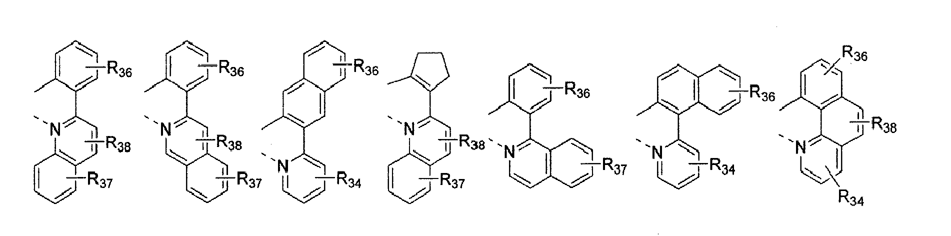 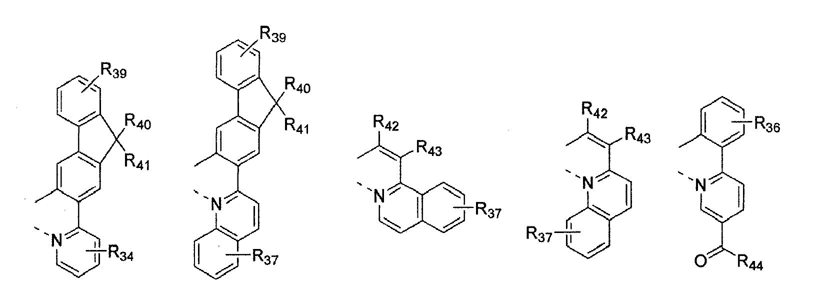 [wherein, R₃₁ and R₃₂ independently represent hydrogen, a linear or branched (C₁-C₆₀)alkyl with or without halogen substituent(s), phenyl with or without linear or branched (C₁-C₆₀)alkyl substituent(s), or halogen;
R₃₃ through R₃₉ independently represent hydrogen, a linear or branched (C₁-C₆₀)alkyl, phenyl with or without linear or branched (C₁-C₆₀)alkyl substituent(s), tri(C₁-C₃₀)alkylsilyl or halogen;
R₄₀ through R₄₃ independently represent hydrogen, a linear or branched (C₁-C₆₀)alkyl, phenyl with or without linear or branched (C₁-C₆₀)alkyl substituent(s); and
R₄₄ represents a linear or branched (C₁-C₆₀)alkyl, phenyl with or without linear or branched (C₁-C₆₀)alkyl substituent(s), or halogen.]

6. The organic electroluminescent device comprising an organic phosphorescent compound according to claim 5, wherein the ligand (L) has a structure represented by one of the following chemical formulas:

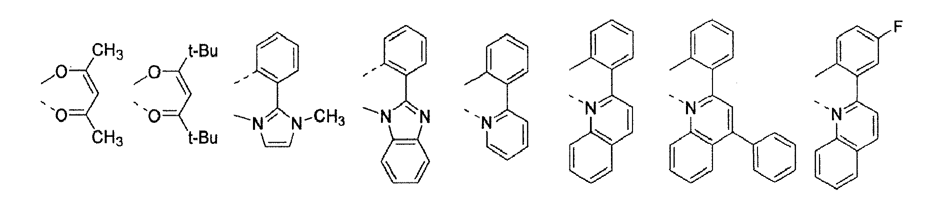

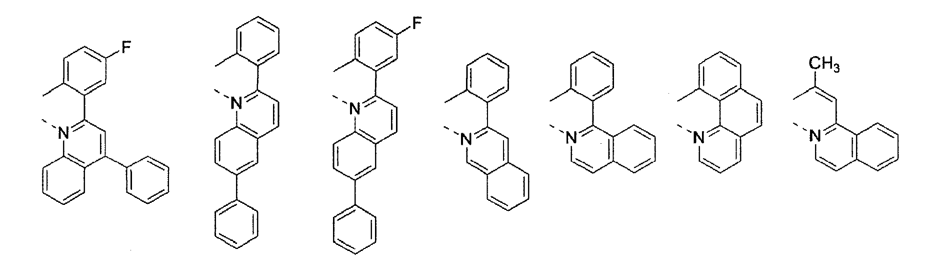

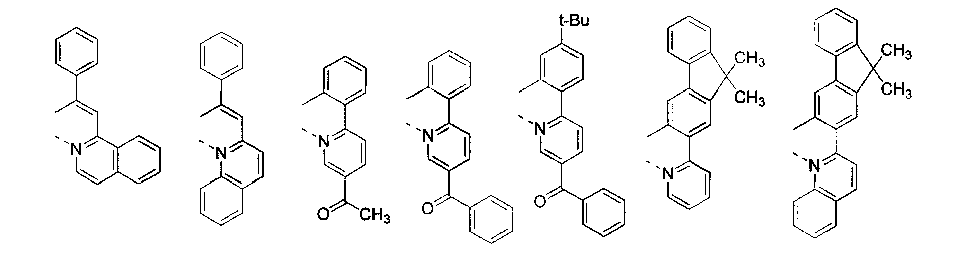

7. The organic electroluminescent device comprising an organic phosphorescent compound according to claim 3, wherein R₁ represents methyl, ethyl, n-propyl, i-propyl, n-butyl, t-butyl, phenyl, biphenyl, naphthyl, t-butylphenyl or fluorophenyl; R₂ through R₅ independently represent hydrogen, methyl, ethyl, n-propyl, i-propyl, n-butyl or t-butyl; R₇ through R₁₄ and R₁₇ through R₂₄ independently represent hydrogen, methyl, ethyl, n-propyl, i-propyl, n-butyl, t-butyl, fluoro, methoxy, ethoxy, butoxy, phenyl, biphenyl, trimethylsilyl, triphenylsilyl or trifluoromethyl; and R₁₅ and R₁₆ independently represent hydrogen or methyl.

8. The organic electroluminescent device according to claim 1, wherein the ligands, L¹ and L² are independently selected from the following structures. 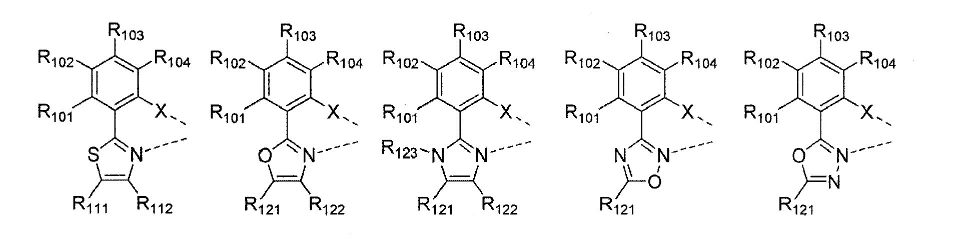 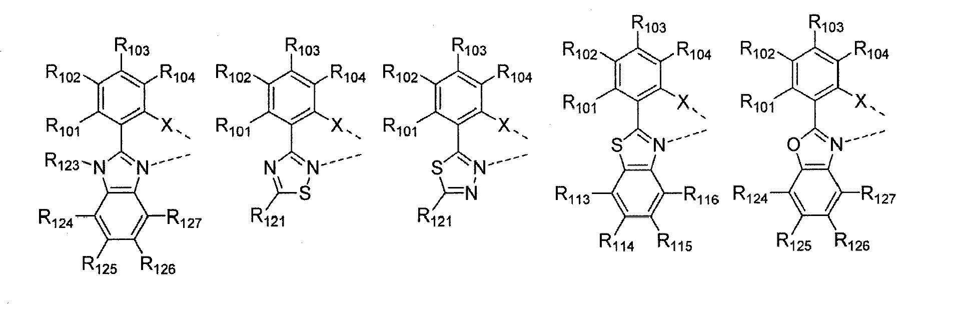 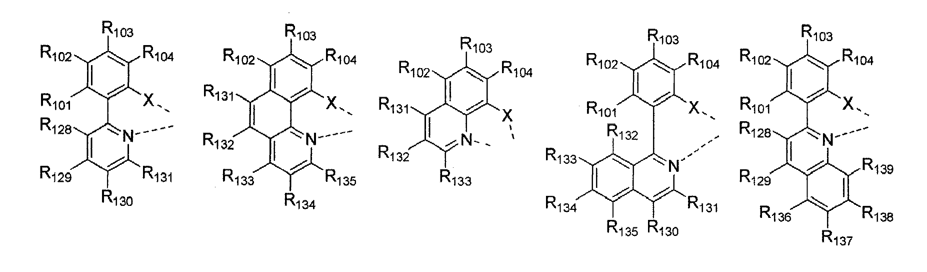 wherein, X represents O, S or Se;
R₁₀₁ through R₁₀₄ independently represent hydrogen, (C1-C60)alkyl with or without halogen substituent(s), halogen, (C6-C60)aryl, (C4-C60)heteroaryl, tri(C1-C30)alkylsilyl, di(C1-C30)alkyl(C6-C30)arylsilyl, tri(C6-C30)arylsilyl, di(C1-C30)alkylamino, di(C6-C30)arylamino, thiophenyl or furanyl, or each of them may be linked to an adjacent substituent via (C3-C12)alkylene or (C3-C12)alkenylene to form a fused ring;
R₁₁₁ through R₁₁₆, R₁₂₁ and R₁₂₂ independently represent hydrogen, (C1-C60)alkyl, halogen, (C1-C60)alkyl with halogen substituent(s), phenyl, naphthyl, biphenyl, fluorenyl, tri(C1-C30)alkylsilyl, di(C1-C30)alkyl(C6-30)arylsilyl, tri(C6-C30)arylsilyl, di(C1-C30)alkylamino, di(C6-C30)arylamino, thiophenyl or furanyl;
R₁₂₃ represents (C1-C60)alkyl, phenyl or naphthyl;
R₁₂₄ through R₁₃₉ independently represent hydrogen, (C1-C60)alkyl, halogen, (C1-C60)alkyl with halogen substituent(s), phenyl, naphthyl, biphenyl, fluorenyl, tri(C1-C30)alkylsilyl, di(C1-C30)alkyl(C6-30)arylsilyl, tri(C6-C30)arylsilyl, di(C1-C30)alkylamino, di(C6-C30)arylamino, thiophenyl or furanyl; and
the phenyl, naphthyl, biphenyl, fluorenyl, thiophenyl or furanyl of R₁₁₁ through R₁₁₆ and R₁₂₁ through R₁₃₉ may be further substituted by one or more substituent(s) selected from (C1-C60)alkyl, halogen, naphthyl, fluorenyl, tri(C1-C30)alkylsilyl, di(C1-C30)alkyl(C6-30)arylsilyl, tri(C6-C30)arylsilyl, di(C1-C30)alkylamino and di(C6-C30)arylamino.

9. The organic electroluminescent device according to claim 1, wherein M¹ is a bivalent metal selected from Be, Zn, Mg, Cu and Ni, or a trivalent metal selected from Al, Ga, In and B.

10. The organic electroluminescent device according to claim 1, wherein Q is selected from the following structures.

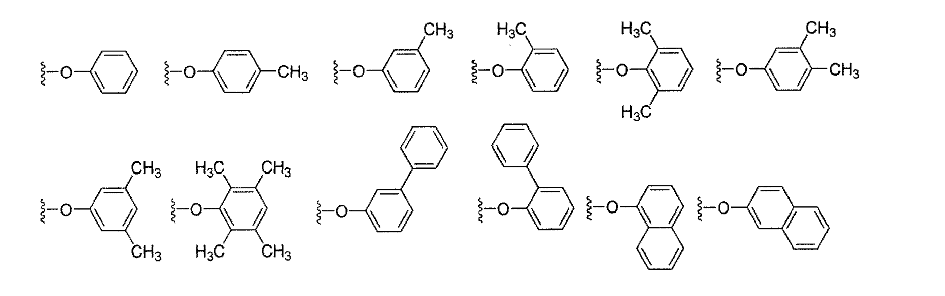

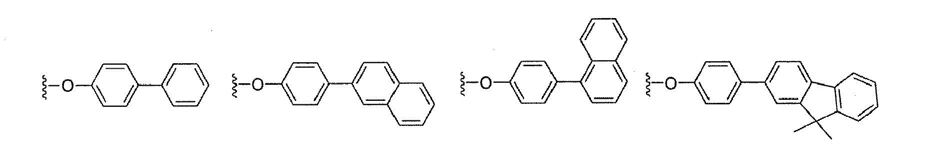

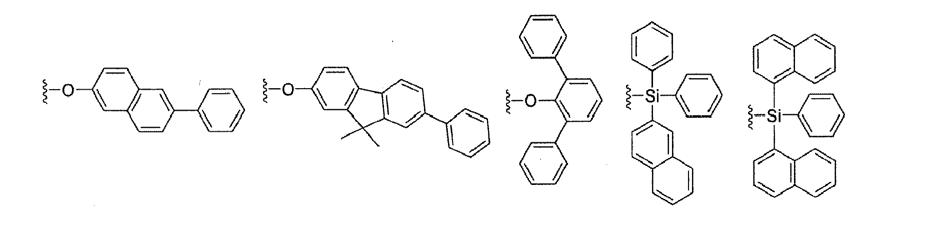

11. The organic electroluminescent device according to claim 1, wherein the host is selected from the following compounds.
